# EUROPEAN PATENT APPLICATION

(11) **EP 4 425 994 A1**
(43) Date of publication of application: **04.09.2024**
(21) Application number: 22885649.8
(22) Date of filing: 11.10.2022
(51) Int. Cl.: H04W 24/08, H04W 8/18, H04W 4/20, H04W 4/50

(54) **DATA ANALYSIS RESULT OBTAINING METHOD AND COMMUNICATION APPARATUS**

(30) Priority: 27.10.2021 CN 202111257298; 28.03.2022 CN 202210316850
(71) Applicant: HUAWEI TECHNOLOGIES CO., LTD., Shenzhen Guangdong 518129 (CN)
(72) Inventor: FENG, Zhao, Shenzhen, Guangdong 518129 (CN); XIN, Yang, Shenzhen, Guangdong 518129 (CN); WANG, Yuan, Shenzhen, Guangdong 518129 (CN)
(74) Representative: Maiwald GmbH
(86) International application number: PCT/CN2022/124495
(87) International publication number: WO 2023/071770

(57) **Abstract**

Embodiments of this application provide a method for obtaining a data analytics result and a communication apparatus. The method includes: A first network element receives first information from a terminal device, where the first information includes an analytics identity, and the analytics identity is used to identify a data analytics type requested by the terminal device; the first network element obtains a data analytics result corresponding to the data analytics type; and the first network element sends the data analytics result to the terminal device. According to this application, the terminal device may obtain, through the first network element, the data analytics result corresponding to the data analytics type identified by the analytics identity. This helps the terminal device make a quick response based on the data analytics result, and helps improve performance of the terminal device.

## Description

This application claims priority to Chinese Patent Application No. 202111257298.0, filed with the China National Intellectual Property Administration on October 27, 2021 and entitled "METHOD FOR OBTAINING DATA ANALYTICS RESULT AND COMMUNICATION APPARATUS", and priority to Chinese Patent Application No. 202210316850.7, filed with the China National Intellectual Property Administration on March 28, 2022 and entitled "METHOD FOR OBTAINING DATA ANALYTICS RESULT AND COMMUNICATION APPARATUS", both of which are incorporated herein by reference in their entireties.

### TECHNICAL FIELD

Embodiments of this application relate to the communication field, and more specifically, to a method for obtaining a data analytics result and a communication apparatus.

### BACKGROUND

The 3rd Generation Partnership Project (3rd Generation Partnership Project, 3GPP) introduces artificial intelligence (artificial intelligence, AI) into a 5th generation (5th generation, 5G) network, and a new network function (network function, NF), namely, a network data analytics function (network data analytics function, NWDAF) network element, is added. The NWDAF is mainly configured to analyze various types of network data, including network running data obtained from an NF, terminal- and network-related statistical data obtained from an operation administration and maintenance (operation administration and maintenance, OAM) system, and operating data obtained from a third-party application function (application function, AF). A data analytics result generated by the NWDAF is also output to the NF, OAM, or third-party AF.

However, no method is currently defined for a terminal to obtain a data analytics result from the NWDAF.

### SUMMARY

Embodiments of this application provide a method for obtaining a data analytics result, so that a terminal device can obtain the data analytics result.

According to a first aspect, a method for obtaining a data analytics result is provided. The method includes: A first network element receives first information from a terminal device, where the first information includes an analytics identity, and the analytics identity is used to identify a data analytics type requested by the terminal device; the first network element obtains a data analytics result corresponding to the data analytics type; and the first network element sends the data analytics result to the terminal device.

Based on the foregoing technical solution, the terminal device sends the first information to the first network element, where the first information includes the analytics identity used to identify the data analytics type requested by the terminal device, so that the first network element may obtain, based on the first information, the data analytics result corresponding to the data analytics type, and send the data analytics result to the terminal device. After obtaining the data analytics result corresponding to the data analytics type, the terminal device may make a quicker response based on the data analytics result, to assist in improving performance of the terminal device.

For example, the first information further includes analytics filter information and/or a trigger condition for sending the data analytics result, and the analytics filter information is used to determine a data analytics range.

The data analytics range is a range of input data for data analytics, or the data analytics range is a range of raw data used to obtain the data analytics result.

In a possible implementation, that the first network element obtains a data analytics result corresponding to the data analytics type includes: The first network element sends a first request message to a data analytics network element, where the first request message includes the analytics identity; and the first network element receives second information from the data analytics network element, where the second information includes the data analytics result.

The first request message is used to request the data analytics result corresponding to the data analytics type identified by the analytics identity.

For example, the first request message further includes the analytics filter information and/or the trigger condition for sending the data analytics result, and the analytics filter information is used to determine the data analytics range.

It should be noted that, if the first information received by the first network element from the terminal device includes the analytics filter information and/or the trigger condition for sending the data analytics result, the first request message sent by the first network element to the data analytics network element includes the analytics filter information and/or the trigger condition for sending the data analytics result. The analytics filter information and/or the trigger condition for sending the data analytics result included in the first information are/is the same as the analytics filter information and/or the trigger condition for sending the data analytics result included in the first request message.

For example, the first request message further includes a first identifier, and the first identifier corresponds to an identifier of the terminal device. The second information further includes the first identifier. That the first network element sends the data analytics result to the terminal device includes: The first network element sends the data analytics result to the terminal device based on a correspondence between the first identifier and the identifier of the terminal device.

It should be understood that the first network element stores the correspondence between the first identifier and the identifier of the terminal device.

Based on the foregoing technical solution, the first network element sends the first identifier to the data analytics network element, and the second information sent by the data analytics network element to the first network element also includes the first identifier, so that the first network element can determine, based on the correspondence between the first identifier and the identifier of the terminal device, the terminal device receiving the data analytics result.

With reference to the first aspect, in some implementations of the first aspect, after the first network element sends the first request message to the data analytics network element, the method further includes: The first network element sends second indication information to the terminal device, where the second indication information indicates that the data analytics type requested by the terminal device has been subscribed to.

For example, the first network element is an access and mobility management function network element, and that the first network element sends second indication information to the terminal device includes: The first network element sends a registration accept message to the terminal device, where the registration accept message includes the second indication information.

For another example, the first network element is a session management network element, and that the first network element sends second indication information to the terminal device includes: The first network element sends a session establishment/modification accept message to the terminal device, where the session establishment/modification accept message includes the second indication information.

With reference to the first aspect, in some implementations of the first aspect, the method further includes: The first network element sends a second request message to a network repository function network element, where the second request message includes the analytics identity; and the first network element receives address information of the data analytics network element from the network repository function network element, where the data analytics network element supports the data analytics type corresponding to the analytics identity.

The second request message is used to request to discover the data analytics network element that supports the data analytics type.

For example, the second request message further includes location area information, and the location area information is determined based on the analytics filter information or location information of the terminal device; and the data analytics network element supports providing a service for a location area identified by the location area information.

For example, the location information is determined based on area of interest (area of interest, AOI) information included in the analytics filter information.

When the second request message includes the location area information, the second request message is used to request to discover the data analytics network element that supports the data analytics type and provides a service for the location area.

In a possible implementation, the first network element is an application function network element, and that a first network element receives first information from a terminal device includes: The first network element receives an application layer uplink data packet from the terminal device, where the application layer uplink data packet includes the first information and an Internet protocol (Internet protocol, IP) address of the terminal device. The first request message further includes a subscription permanent identifier (subscription permanent identifier, SUPI) or a generic public subscription identifier (generic public subscription identifier, GPSI) corresponding to the IP address.

With reference to the first aspect, in some implementations of the first aspect, the method further includes: The first network element sends a third request message to a binding support function network element, where the third request message includes the IP address; and the first network element receives a response message of the third request message from the binding support function network element, where the response message includes the SUPI or the GPSI.

The third request message is used to request the SUPI or the GPSI corresponding to the IP address of the terminal device.

In another possible implementation, the first network element is an access and mobility management function network element, and that a first network element receives first information from a terminal device includes: The first network element receives a registration request message from the terminal device, where the registration request message includes the first information. That the first network element sends the data analytics result to the terminal device includes: The first network element sends a registration accept message to the terminal device, where the registration accept message includes the data analytics result.

In still another possible implementation, the first network element is an access and mobility management function network element, and that a first network element receives first information from a terminal device includes: The first network element receives a service request message from the terminal device, where the service request message includes the first information. That the first network element sends the data analytics result to the terminal device includes: The first network element sends a non-access stratum message to the terminal device, where the non-access stratum message includes the data analytics result.

In still another possible implementation, the first network element is a session management network element, and that a first network element receives first information from a terminal device includes: The first network element receives a session modification request message from the terminal device, where the session modification request message includes the first information. That the first network element sends the data analytics result to the terminal device includes: The first network element sends a session modification command message to the terminal device, where the session modification command message includes the data analytics result.

In still another possible implementation, the first network element is a session management network element, and that a first network element receives first information from a terminal device includes: The first network element receives a session establishment request message from the terminal device, where the session establishment request message includes the first information. That the first network element sends the data analytics result to the terminal device includes: The first network element sends a session establishment accept message to the terminal device, where the session establishment accept message includes the data analytics result.

In still another possible implementation, the first network element is a session management network element, and that a first network element receives first information from a terminal device includes: The first network element receives the first information through a user plane function network element, where the first information is included in a user plane uplink data packet received by the user plane function network element from the terminal device. That the first network element sends the data analytics result to the terminal device includes: The first network element sends a session modification command message to the terminal device, where the session modification command message includes the data analytics result.

For example, the method further includes: The first network element receives first indication information from the terminal device, where the first indication information indicates the terminal device to carry the first information in the user plane uplink data packet; and the first network element sends, to the user plane function network element based on the first indication information, a packet detection rule corresponding to the user plane uplink data packet.

The first indication information may explicitly indicate the terminal device to carry the first information in the user plane uplink data packet. For example, the first indication information is 1-bit information, and when the first indication information is "0", the first indication information indicates the terminal device to carry the first information in the user plane uplink data packet; or when the first indication information is "1", the first indication information indicates the terminal device to carry the first information in the user plane uplink data packet. The first indication information may be named as an analytics subscription indication (analytics subscription indication). Alternatively, the first indication information may implicitly indicate the terminal device to carry the first information in the user plane uplink data packet. For example, the first indication information is a preset data network name (data network name, DNN) and/or single network slice selection assistance information (single network slice selection assistance information, S-NSSAI). If a session establishment/modification request message sent by the terminal device to the session management network element includes the preset DNN and/or S-NSSAI, the session management network element determines, based on the preset DNN and/or the S-NSSAI, that the terminal device carries the first information in the user plane uplink data packet.

The packet detection rule corresponding to the user plane uplink data packet is used to forward the first information to the session management network element. The user plane function network element receives the user plane uplink data packet from the terminal device, and if the user plane uplink data packet includes the first information, the user plane function network element sends, to the session management network element according to the packet detection rule, the first information included in the user plane uplink data packet. For example, the packet detection rule includes a correspondence between a quality of service (quality of service, QoS) flow identifier (QoS flow identifier, QFI) and address information of the session management network element, and the QFI is used to identify a QoS flow of a session for which the terminal device sends the first information and receives the data analytics result. Correspondingly, the user plane function network element determines, based on a correspondence between a QFI of a QoS flow of the user plane uplink data packet and the address information of the session management network element, to send the first information included in the user plane uplink data packet to the session management network element.

In yet another possible implementation, the first network element is a user plane function network element, and that a first network element receives first information from a terminal device includes: The first network element receives a user plane uplink data packet from the terminal device, where the user plane uplink data packet includes the first information. That the first network element sends the data analytics result to the terminal device includes: The first network element sends a user plane downlink data packet to the terminal device, where the user plane downlink data packet includes the data analytics result.

According to a second aspect, a method for obtaining a data analytics result is provided. The method may include: A terminal device sends first information to a first network element, where the first information includes an analytics identity, and the analytics identity is used to identify a data analytics type requested by the terminal device; and the terminal device receives a data analytics result corresponding to the data analytics type.

Based on the foregoing technical solution, the terminal device sends the first information, where the first information includes the analytics identity used to identify the data analytics type requested by the terminal device, so that the terminal device may obtain the data analytics result corresponding to the data analytics type. This helps the terminal device make a quicker response based on the data analytics result, and helps improve performance of the terminal device.

For example, the first information further includes analytics filter information and/or a trigger condition for sending the data analytics result, and the analytics filter information is used to determine a data analytics range.

The data analytics range is a range of input data for data analytics, or the data analytics range is a range of raw data used to obtain the data analytics result.

In a possible implementation, the first network element is an access and mobility management function network element, and that a terminal device sends first information to a first network element includes: The terminal device sends a registration request message to the first network element, where the registration request message includes the first information. That the terminal device receives a data analytics result corresponding to the data analytics type includes: The terminal device receives a registration accept message from the first network element, where the registration accept message includes the data analytics result.

In another possible implementation, the first network element is an access and mobility management function network element, and that a terminal device sends first information to a first network element includes: The terminal device sends a service request message to the first network element, where the service request message includes the first information. That the terminal device receives a data analytics result corresponding to the data analytics type includes: The terminal device receives a non-access stratum message from the first network element, where the non-access stratum message includes the data analytics result.

In another possible implementation, the first network element is a session management network element, and that a terminal device sends first information to a first network element includes: The terminal device sends a session modification request message to the first network element, where the session modification request message includes the first information. That the terminal device receives a data analytics result corresponding to the data analytics type includes: The terminal device receives a session modification command message from the first network element, where the session modification command message includes the data analytics result. Alternatively, that the terminal device receives a data analytics result corresponding to the data analytics type includes: The terminal device receives a user plane downlink data packet from a user plane function network element, where the user plane downlink data packet includes the data analytics result.

In still another possible implementation, the first network element is a user plane function network element, and that a terminal device sends first information to a first network element includes: The terminal device sends a user plane uplink data packet to the first network element, where the user plane uplink data packet includes the first information. That the terminal device receives a data analytics result corresponding to the data analytics type includes: The terminal device receives a session modification command message from a session management network element, where the session modification command message includes the data analytics result. Alternatively, that the terminal device receives a data analytics result corresponding to the data analytics type includes: The terminal device receives a user plane downlink data packet from the first network element, where the user plane downlink data packet includes the data analytics result.

For example, the method further includes: The terminal device sends first indication information to the session management network element, where the first indication information indicates the terminal device to carry the first information in the user plane uplink data packet.

In yet another possible implementation, the first network element is an application function network element, and that a terminal device sends first information to a first network element includes: The terminal device sends an application layer uplink data packet to the first network element, where the application layer uplink data packet includes the first information. That the terminal device receives a data analytics result corresponding to the data analytics type includes: The terminal device receives an application layer downlink data packet from the first network element, where the application layer downlink data packet includes the data analytics result.

With reference to the second aspect, in some implementations of the second aspect, the method further includes: The terminal device receives second indication information from the first network element, where the second indication information indicates that the data analytics type requested by the terminal device has been subscribed to.

For example, the first network element is an access and mobility management function network element, and that the terminal device receives second indication information from the first network element includes: The terminal device receives a registration accept message from the first network element, where the registration accept message includes the second indication information.

For another example, the first network element is a session management network element, and that the terminal device receives second indication information from the first network element includes: The terminal device receives a session establishment/modification accept message from the first network element, where the session establishment/modification accept message includes the second indication information.

According to a third aspect, a method for obtaining a data analytics result is provided. The method includes: A session management network element obtains first information, where the first information includes an analytics identity, and the analytics identity is used to identify a data analytics type requested by a terminal device; and the session management network element sends a fourth request message to a data analytics network element, where the fourth request message includes the analytics identity and address information of a user plane function network element, the address information of the user plane function network element is used to receive a data analytics result sent by the data analytics network element, and the data analytics result corresponds to the data analytics type.

The fourth request message is used to request the data analytics network element to send the data analytics result to the user plane function network element.

Based on the foregoing technical solution, the session management network element obtains the first information, where the first information includes the analytics identity used to identify the data analytics type requested by the terminal device, so that the session management network element can request, based on the first information, the data analytics network element to send the data analytics result corresponding to the data analytics type to the user plane function network element. This helps the user plane function network to send the data analytics result to the terminal device through a user plane. After obtaining the data analytics result corresponding to the data analytics type, the terminal device may make a quicker response based on the data analytics result, to assist in improving performance of the terminal device.

For example, the first information further includes analytics filter information and/or a trigger condition for sending the data analytics result, and the analytics filter information indicates a data analytics range. The fourth request message further includes the analytics filter information and/or the trigger condition for sending the data analytics result.

The data analytics range is a range of input data for data analytics, or the data analytics range is a range of raw data used to obtain the data analytics result.

It should be noted that, if the first information obtained by the session management network element includes the analytics filter information and/or the trigger condition for sending the data analytics result, the fourth request message sent by the session management network element to the data analytics network element includes the analytics filter information and/or the trigger condition for sending the data analytics result. The analytics filter information and/or the trigger condition for sending the data analytics result included in the first information are/is the same as the analytics filter information and/or the trigger condition for sending the data analytics result included in the fourth request message.

With reference to the third aspect, in some implementations of the third aspect, the method further includes: The session management network element receives first indication information from the terminal device, where the first indication information indicates the terminal device to carry the first information in a user plane uplink data packet; and the session management network element sends, to the user plane function network element based on the first indication information, a packet detection rule corresponding to the user plane uplink data packet. That a session management network element obtains first information includes: The session management network element receives the user plane uplink data packet from the user plane function network element, where the user plane uplink data packet includes the first information.

For descriptions of the first indication information and the packet detection rule, refer to the first aspect. For brevity, details are not described herein again.

With reference to the third aspect, in some implementations of the third aspect, that a session management network element obtains first information includes: The session management network element receives a session modification request message from the terminal device, where the session modification request message includes the first information.

With reference to the third aspect, in some implementations of the third aspect, that a session management network element obtains first information includes: The session management network element receives a session establishment request message from the terminal device, where the session establishment request message includes the first information.

With reference to the third aspect, in some implementations of the third aspect, the fourth request message further includes a first identifier, the first identifier corresponds to an identifier of the terminal device, and the method further includes: The session management network element sends address information of the data analytics network element and the first identifier to the user plane function network element.

With reference to the third aspect, in some implementations of the third aspect, the method further includes: The session management network element sends a second request message to a network repository function network element, where the second request message includes the analytics identity; and the session management network element receives address information of the data analytics network element from the network repository function network element, where the data analytics network element supports the data analytics type corresponding to the analytics identity.

The second request message is used to request to discover the data analytics network element that supports the data analytics type.

For example, the second request message further includes location area information, where the location area information is determined based on the analytics filter information or location information of the terminal device, and the analytics filter information is used to determine the data analytics range; and the data analytics network element supports providing a service for a location area identified by the location area information.

For example, the location information is determined based on AOI information included in the analytics filter information.

When the second request message includes the location area information, the second request message is used to request to discover the data analytics network element that supports the data analytics type and provides a service for the location area.

According to a fourth aspect, a method for obtaining a data analytics result is provided. The method includes: A data analytics network element receives a fourth request message, where the fourth request message includes an analytics identity and address information of a user plane function network element, the analytics identity is used to identify a data analytics type requested by a terminal device, the address information of the user plane function network element is used to receive a data analytics result sent by the data analytics network element, and the data analytics result corresponds to the data analytics type; and the data analytics network element sends second information to the user plane function network element, where the second information includes the data analytics result.

The fourth request message is used to request the data analytics network element to send the data analytics result to the user plane function network element.

Based on the foregoing technical solution, the data analytics network element may send, to the user plane function network element based on the fourth request message, the data analytics result corresponding to the data analytics type identified by the analytics identity, so that the user plane function network element can send the data analytics result to the terminal device through a user plane. After obtaining the data analytics result corresponding to the data analytics type, the terminal device may make a quicker response based on the data analytics result, to assist in improving performance of the terminal device.

For example, the fourth request message further includes analytics filter information and/or a trigger condition for sending the data analytics result, and the analytics filter information is used to determine a data analytics range.

With reference to the fourth aspect, in some implementations of the fourth aspect, the fourth request message further includes a first identifier, the first identifier corresponds to an identifier of the terminal device, and the second information further includes the first identifier and address information of the data analytics network element.

According to a fifth aspect, a method for obtaining a data analytics result is provided. The method includes: A user plane function network element receives second information from a data analytics network element, where the second information includes a data analytics result; and the user plane function network element sends the data analytics result to a terminal device.

Based on the foregoing technical solution, the user plane function network element may send the data analytics result to the terminal device through a user plane. After obtaining the data analytics result, the terminal device may make a quicker response based on the data analytics result, to assist in improving performance of the terminal device.

With reference to the fifth aspect, in some implementations of the fifth aspect, the method further includes: The user plane function network element receives a packet detection rule from a session management network element, where the packet detection rule corresponds to a user plane uplink data packet, the user plane uplink data packet includes first information, the first information includes an analytics identity, the analytics identity is used to identify a data analytics type requested by the terminal device, and the data analytics type corresponds to the data analytics result; the user plane function network element receives the user plane uplink data packet from the terminal device; and the user plane function network element sends the user plane uplink data packet to the session management network element according to the packet detection rule.

For a description of the packet detection rule, refer to the first aspect. For brevity, details are not described herein again.

Based on the foregoing technical solution, the user plane function network element sends the user plane uplink data packet to the session management network element according to the packet detection rule, where the user plane uplink data packet includes the first information. This helps the session management network element request the data analytics result from the data analytics network element based on the first information.

With reference to the fifth aspect, in some implementations of the fifth aspect, the method further includes: The user plane function network element receives address information of the data analytics network element and/or a first identifier from the session management network element, where the first identifier corresponds to an identifier of the terminal device, and the second information further includes the address information and the first identifier. That the user plane function network element sends the data analytics result to a terminal device includes: The user plane function network element sends the data analytics result to the terminal device based on a correspondence between the first identifier and the identifier of the terminal device.

Based on the foregoing technical solution, the user plane function network element receives the address information of the data analytics network element and the first identifier from the session management network element, and the second information received from the data analytics network element includes the address information of the data analytics network element and the first identifier. After receiving the second information from the data analytics network element, the user plane function network element may determine, based on the correspondence between the first identifier and the identifier of the terminal device, the terminal device receiving the data analytics result.

According to a sixth aspect, a communication apparatus is provided. The communication apparatus includes a transceiver unit. The transceiver unit is configured to receive first information from a terminal device, the first information includes an analytics identity, and the analytics identity is used to identify a data analytics type requested by the terminal device. The transceiver unit is further configured to obtain a data analytics result corresponding to the data analytics type. The transceiver unit is further configured to send the data analytics result to the terminal device.

With reference to the sixth aspect, in some implementations of the sixth aspect, the first information further includes analytics filter information and/or a trigger condition for sending the data analytics result, and the analytics filter information is used to determine a data analytics range.

With reference to the sixth aspect, in some implementations of the sixth aspect, the transceiver unit is specifically configured to: send a first request message to a data analytics network element, where the first request message includes the analytics identity; and receive second information from the data analytics network element, where the second information includes the data analytics result.

With reference to the sixth aspect, in some implementations of the sixth aspect, the first request message further includes the analytics filter information and/or the trigger condition for sending the data analytics result, and the analytics filter information is used to determine the data analytics range.

With reference to the sixth aspect, in some implementations of the sixth aspect, the transceiver unit is further configured to send a second request message to a network repository function network element, where the second request message includes the analytics identity; and the transceiver unit is further configured to receive the address information of the data analytics network element from the network repository function network element, where the data analytics network element supports the data analytics type corresponding to the analytics identity.

With reference to the sixth aspect, in some implementations of the sixth aspect, the second request message further includes location area information, and the location area information is determined based on the analytics filter information or location information of the terminal device; and the data analytics network element supports providing a service for a location area identified by the location area information.

With reference to the sixth aspect, in some implementations of the sixth aspect, the first request message further includes a first identifier, and the first identifier corresponds to an identifier of the terminal device. The second information further includes the first identifier. The transceiver unit is specifically configured to send the data analytics result to the terminal device based on a correspondence between the first identifier and the identifier of the terminal device.

With reference to the sixth aspect, in some implementations of the sixth aspect, the transceiver unit is further configured to send first indication information to the terminal device, where the first indication information indicates that the data analytics result requested by the terminal device has been subscribed to.

With reference to the sixth aspect, in some implementations of the sixth aspect, the transceiver unit is specifically configured to: receive an application layer uplink data packet from the terminal device, where the application layer uplink data packet includes the first information and an IP address of the terminal device; and send an application layer downlink data packet to the terminal device, where the application layer downlink data packet includes the data analytics result, and the first request message further includes a SUPI or a GPSI corresponding to the IP address.

With reference to the sixth aspect, in some implementations of the sixth aspect, the transceiver unit is further configured to send a third request message to a binding support function network element, where the third request message includes the IP address; and the transceiver unit is further configured to receive a response message of the third request message from the binding support function network element, where the response message includes the SUPI or the GPSI.

With reference to the sixth aspect, in some implementations of the sixth aspect, the transceiver unit is specifically configured to: receive a registration request message from the terminal device, where the registration request message includes the first information; and send a registration accept message to the terminal device, where the registration accept message includes the data analytics result.

With reference to the sixth aspect, in some implementations of the sixth aspect, the transceiver unit is specifically configured to: receive a service request message from the terminal device, where the service request message includes the first information; and send a non-access stratum message to the terminal device, where the non-access stratum message includes the data analytics result.

With reference to the sixth aspect, in some implementations of the sixth aspect, the transceiver unit is specifically configured to: receive a session modification request message from the terminal device, where the session modification request message includes the first information; and send a session modification command message to the terminal device, where the session modification command message includes the data analytics result.

With reference to the sixth aspect, in some implementations of the sixth aspect, the transceiver unit is specifically configured to: receive a session establishment request message from the terminal device, where the session establishment request message includes the first information; and send a session establishment accept message to the terminal device, where the session establishment accept message includes the data analytics result.

With reference to the sixth aspect, in some implementations of the sixth aspect, the transceiver unit is specifically configured to: receive the first information through a user plane function network element, where the first information is included in a user plane uplink data packet received by the user plane function network element from the terminal device; and send a session modification command message to the terminal device, where the session modification command message includes the data analytics result.

With reference to the sixth aspect, in some implementations of the sixth aspect, the transceiver unit is further configured to: receive first indication information from the terminal device, where the first indication information indicates the terminal device to carry the first information in the user plane uplink data packet; and send, to the user plane function network element based on the first indication information, a packet detection rule corresponding to the user plane uplink data packet.

With reference to the sixth aspect, in some implementations of the sixth aspect, the transceiver unit is specifically configured to: receive a user plane uplink data packet from the terminal device, where the user plane uplink data packet includes the first information; and send a user plane downlink data packet to the terminal device, where the user plane downlink data packet includes the data analytics result.

According to a seventh aspect, a communication apparatus is provided. The communication apparatus includes a transceiver unit. The transceiver unit is configured to send first information to a first network element. The first information includes an analytics identity, and the analytics identity is used to identify a data analytics type requested by a terminal device. The transceiver unit is further configured to receive a data analytics result corresponding to the data analytics type.

With reference to the seventh aspect, in some implementations of the seventh aspect, the first information further includes analytics filter information and/or a trigger condition for sending the data analytics result, and the analytics filter information is used to determine a data analytics range.

With reference to the seventh aspect, in some implementations of the seventh aspect, the first network element is an access and mobility management function network element, and the transceiver unit is specifically configured to: send a registration request message to the first network element, where the registration request message includes the first information; and receive a registration accept message from the first network element, where the registration accept message includes the data analytics result.

With reference to the seventh aspect, in some implementations of the seventh aspect, the first network element is an access and mobility management function network element, and the transceiver unit is specifically configured to: send a service request message to the first network element, where the service request message includes the first information; and receive a non-access stratum message from the first network element, where the non-access stratum message includes the data analytics result.

With reference to the seventh aspect, in some implementations of the seventh aspect, the first network element is a session management network element, and the transceiver unit is specifically configured to: send a session modification request message to the first network element, where the session modification request message includes the first information; and receive a session modification command message from the first network element, where the session modification command message includes the data analytics result; or receive a user plane downlink data packet from a user plane function network element, where the user plane downlink data packet includes the data analytics result.

With reference to the seventh aspect, in some implementations of the seventh aspect, the first network element is a user plane function network element, and the transceiver unit is specifically configured to: send a user plane uplink data packet to the first network element, where the user plane uplink data packet includes the first information; and receive a session modification command message from a session management network element, where the session modification command message includes the data analytics result; or receive a user plane downlink data packet from the first network element, where the user plane downlink data packet includes the data analytics result.

With reference to the seventh aspect, in some implementations of the seventh aspect, the transceiver unit is further configured to send first indication information to the session management network element, where the first indication information indicates the terminal device to carry the first information in the user plane uplink data packet.

With reference to the seventh aspect, in some implementations of the seventh aspect, the first network element is an application function network element, and the transceiver unit is specifically configured to: send an application layer uplink data packet to the first network element, where the application layer uplink data packet includes the first information; and receive an application layer downlink data packet from the first network element, where the application layer downlink data packet includes the data analytics result.

With reference to the seventh aspect, in some implementations of the seventh aspect, the transceiver unit is further configured to receive the first indication information, where the first indication information indicates that the data analytics result requested by the terminal device has been subscribed to.

According to an eighth aspect, a communication apparatus is provided. The communication apparatus includes a transceiver unit. The transceiver unit is configured to obtain first information, where the first information includes an analytics identity, and the analytics identity is used to identify a data analytics type requested by a terminal device. The transceiver unit is further configured to send a fourth request message to a data analytics network element, where the fourth request message includes the analytics identity and address information of a user plane function network element, the address information of the user plane function network element is used to receive a data analytics result sent by the data analytics network element, and the data analytics result corresponds to the data analytics type.

With reference to the eighth aspect, in some implementations of the eighth aspect, the transceiver unit is further configured to receive first indication information from the terminal device, where the first indication information indicates the terminal device to carry the first information in a user plane uplink data packet. The transceiver unit is further configured to send, to the user plane function network element based on the first indication information, a packet detection rule corresponding to the user plane uplink data packet. The transceiver unit is specifically configured to receive the user plane uplink data packet from the user plane function network element, where the user plane uplink data packet includes the first information.

With reference to the eighth aspect, in some implementations of the eighth aspect, the transceiver unit is specifically configured to receive a session modification request message from the terminal device, where the session modification request message includes the first information.

With reference to the eighth aspect, in some implementations of the eighth aspect, the transceiver unit is specifically configured to receive a session establishment request message from the terminal device, where the session establishment request message includes the first information.

With reference to the eighth aspect, in some implementations of the eighth aspect, the first information further includes analytics filter information and/or a trigger condition for sending the data analytics result, and the analytics filter information indicates a data analytics range. The fourth request message further includes the analytics filter information and/or the trigger condition for sending the data analytics result.

With reference to the eighth aspect, in some implementations of the eighth aspect, the fourth request message further includes a first identifier, the first identifier corresponds to an identifier of the terminal device, and the transceiver unit is further configured to send address information of the data analytics network element and the first identifier to the user plane function network element.

With reference to the eighth aspect, in some implementations of the eighth aspect, the transceiver unit is further configured to send a second request message to a network repository function network element, where the second request message includes the analytics identity; and the transceiver unit is further configured to receive the address information of the data analytics network element from the network repository function network element, where the data analytics network element supports the data analytics type corresponding to the analytics identity.

With reference to the eighth aspect, in some implementations of the eighth aspect, the second request message further includes location area information, where the location area information is determined based on the analytics filter information or location information of the terminal device, and the analytics filter information indicates the data analytics range; and the data analytics network element supports providing a service for a location area identified by the location area information.

According to a ninth aspect, a communication apparatus is provided. The communication apparatus includes a transceiver unit. The transceiver unit is configured to receive a fourth request message, the fourth request message includes an analytics identity and address information of a user plane function network element, the analytics identity is used to identify a data analytics type requested by a terminal device, the address information of the user plane function network element is used to receive a data analytics result sent by a data analytics network element, and the data analytics result corresponds to the data analytics type. The transceiver unit is further configured to send second information to the user plane function network element, where the second information includes the data analytics result.

With reference to the ninth aspect, in some implementations of the ninth aspect, the fourth request message further includes analytics filter information and/or a trigger condition for sending the data analytics result, and the analytics filter information is used to determine a data analytics range.

With reference to the ninth aspect, in some implementations of the ninth aspect, the fourth request message further includes a first identifier, the first identifier corresponds to an identifier of the terminal device, and the second information further includes the first identifier and address information of the data analytics network element.

According to a tenth aspect, a communication apparatus is provided. The communication apparatus includes a transceiver unit. The transceiver unit is configured to receive second information from a data analytics network element, where the second information includes a data analytics result. The transceiver unit is further configured to send the data analytics result to a terminal device.

With reference to the tenth aspect, in some implementations of the tenth aspect, the transceiver unit is further configured to receive a packet detection rule from a session management network element, where the packet detection rule corresponds to a user plane uplink data packet, the user plane uplink data packet includes first information, the first information includes an analytics identity, the analytics identity is used to identify a data analytics type requested by the terminal device, and the data analytics type corresponds to the data analytics result. The transceiver unit is further configured to receive the user plane uplink data packet from the terminal device. The transceiver unit is further configured to send the user plane uplink data packet to the session management network element according to the packet detection rule.

With reference to the tenth aspect, in some implementations of the tenth aspect, the transceiver unit is further configured to receive address information of the data analytics network element and/or a first identifier from the session management network element, where the first identifier corresponds to an identifier of the terminal device, and the second information further includes the address information and the first identifier. The transceiver unit is specifically configured to send the data analytics result to the terminal device based on a correspondence between the first identifier and the identifier of the terminal device.

According to an eleventh aspect, a communication apparatus is provided, including a processor. The processor is coupled to a memory, and may be configured to execute instructions in the memory, to implement the method according to any one of the first aspect and the possible implementations of the first aspect. For example, the communication apparatus further includes the memory. For example, the communication apparatus further includes a communication interface, and the processor is coupled to the communication interface.

In an implementation, the communication apparatus is a first network element. When the communication apparatus is the first network element, the communication interface may be a transceiver or an input/output interface.

In another implementation, the communication apparatus is a chip disposed in the first network element. When the communication apparatus is the chip disposed in the first network element, the communication interface may be an input/output interface.

For example, the transceiver may be a transceiver circuit. For example, the input/output interface may be an input/output circuit.

According to a twelfth aspect, a communication apparatus is provided, including a processor. The processor is coupled to a memory, and may be configured to execute instructions in the memory, to implement the method according to any one of the second aspect and the possible implementations of the second aspect. For example, the communication apparatus further includes the memory. For example, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

For example, the transceiver may be a transceiver circuit. For example, the input/output interface may be an input/output circuit.

According to a thirteenth aspect, a communication apparatus is provided, including a processor. The processor is coupled to a memory, and may be configured to execute instructions in the memory, to implement the method in any one of the third aspect and the possible implementations of the third aspect. For example, the communication apparatus further includes the memory. For example, the communication apparatus further includes a communication interface, and the processor is coupled to the communication interface.

In an implementation, the communication apparatus is a session management network element. When the communication apparatus is the session management network element, the communication interface may be a transceiver or an input/output interface.

In another implementation, the communication apparatus is a chip disposed in the session management network element. When the communication apparatus is the chip disposed in the session management network element, the communication interface may be an input/output interface.

For example, the transceiver may be a transceiver circuit. For example, the input/output interface may be an input/output circuit.

According to a fourteenth aspect, a communication apparatus is provided, including a processor. The processor is coupled to a memory, and may be configured to execute instructions in the memory, to implement the method according to any one of the fourth aspect and the possible implementations of the fourth aspect. For example, the communication apparatus further includes the memory. For example, the communication apparatus further includes a communication interface, and the processor is coupled to the communication interface.

In an implementation, the communication apparatus is a data analytics network element. When the communication apparatus is the data analytics network element, the communication interface may be a transceiver or an input/output interface.

In another implementation, the communication apparatus is a chip disposed in the data analytics network element. When the communication apparatus is the chip disposed in the data analytics network element, the communication interface may be an input/output interface.

For example, the transceiver may be a transceiver circuit. For example, the input/output interface may be an input/output circuit.

According to a fifteenth aspect, a communication apparatus is provided, including a processor. The processor is coupled to a memory, and may be configured to execute instructions in the memory, to implement the method according to any one of the fifth aspect and the possible implementations of the fifth aspect. For example, the communication apparatus further includes the memory. For example, the communication apparatus further includes a communication interface, and the processor is coupled to the communication interface.

In an implementation, the communication apparatus is a user plane function network element. When the communication apparatus is the user plane function network element, the communication interface may be a transceiver or an input/output interface.

In another implementation, the communication apparatus is a chip disposed in the user plane function network element. When the communication apparatus is the chip disposed in the user plane function network element, the communication interface may be an input/output interface.

For example, the transceiver may be a transceiver circuit. For example, the input/output interface may be an input/output circuit.

According to a sixteenth aspect, a processor is provided, including an input circuit, an output circuit, and a processing circuit. The processing circuit is configured to: receive a signal through the input circuit, and transmit a signal through the output circuit, so that the processor performs the method according to any one of the possible implementations of the first aspect to the fifth aspect.

During specific implementation, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventeenth aspect, a processing apparatus is provided, including a processor and a memory. The processor is configured to: read instructions stored in the memory, receive a signal through a receiver, and transmit a signal through a transmitter, to perform the method according to any one of the possible implementations of the first aspect to the fifth aspect.

For example, there is one or more processors, and there is one or more memories.

For example, the memory may be integrated with the processor, or the memory and the processor are separately disposed.

During specific implementation, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process like sending of indication information may be a process of outputting the indication information from the processor, and receiving of capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus in the seventeenth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to an eighteenth aspect, a computer program product is provided, and the computer program product includes a computer program (which may also be referred to as code or an instruction). When the computer program is run, a computer is enabled to perform the method according to any one of the possible implementations of the first aspect to the fifth aspect.

According to a nineteenth aspect, a computer-readable storage medium is provided. The computer-readable storage medium stores a computer program (which may also be referred to as code or an instruction). When the computer program runs on a computer, the method according to any one of the possible implementations of the first aspect to the fifth aspect is performed.

According to a twentieth aspect, a communication system is provided, including at least two of the foregoing first network element, the terminal device, and the data analytics network element, or including at least two of the session management network element, the user plane function network element, the terminal device, and the data analytics network element.

According to a twenty-first aspect, a method for obtaining a data analytics result is provided. The method includes: An application function network element receives requirement information from a terminal device, where the requirement information indicates a data analytics type required by the terminal device; and the application function network element sends a data request message to a data analytics network element, where the data request message includes an analytics identity, an identifier of the terminal device, and indication information indicating the data analytics network element to send, to the terminal device, a data analytics result corresponding to the data analytics type, and the analytics identity is used to identify the data analytics type.

Based on the foregoing technical solution, the terminal device sends the requirement information to the application function network element, where the requirement information indicates the data analytics type required by the terminal device, so that the application function network element may request, based on the requirement information, the data analytics result from the data analytics network element that can provide the terminal device with the data analytics result corresponding to the data analytics type, and indicate the data analytics network element to send the data analytics result to the terminal device. After obtaining the data analytics result, the terminal device may make a quicker response based on the data analytics result, to assist in improving performance of the terminal device.

In addition, in embodiments of this application, the application function network element requests the data analytics result from the data analytics network element based on a requirement of the terminal device, and the terminal device does not request the data analytics result from the data analytics network element. This avoids a security problem that may be caused by the terminal device requesting the data analytics result. For example, for a pseudo terminal device or a terminal device that is incorrectly used or maliciously hijacked to attack a network, even if the application function network element receives requirement information of such terminal device, the application function network element does not request the data analytics result from the data analytics network element for such terminal device. This can avoid security problems such as information leakage and network congestion caused by obtaining the data analytics result by such terminal device.

With reference to the twenty-first aspect, in some implementations of the twenty-first aspect, the indication information includes a notification identifier.

Correspondingly, based on the notification identifier, the data analytics network element determines to send the data analytics result to the terminal device corresponding to the identifier of the terminal device.

With reference to the twenty-first aspect, in some implementations of the twenty-first aspect, the identifier of the terminal device includes a SUPI or a GPSI, and the method further includes: The application function network element sends an IP address of the terminal device to a binding support function network element; and the application function network element receives the SUPI or the GPSI of the terminal device from the binding support function network element.

With reference to the twenty-first aspect, in some implementations of the twenty-first aspect, the data request message further includes indication information indicating the data analytics network element to send the data analytics result to the terminal device in a control plane manner or a user plane manner.

Correspondingly, based on the indication information, the data analytics network element determines to send the data analytics result to the terminal device in the control plane manner or the user plane manner.

With reference to the twenty-first aspect, in some implementations of the twenty-first aspect, the method further includes: The application function network element sends the identifier of the terminal device and the analytics identity to a unified data management network element; and the application function network element receives, from the unified data management network element, an identifier of the data analytics network element corresponding to the identifier of the terminal device or an address of the data analytics network element.

With reference to the twenty-first aspect, in some implementations of the twenty-first aspect, the method further includes: The application function network element sends the analytics identity to the terminal device, where the analytics identity is used by the terminal device to determine the data analytics type of the data analytics result.

Based on the foregoing technical solution, if the terminal device receives the analytics identity and the data analytics result, the terminal device determines the data analytics type of the data analytics result based on the analytics identity received from the application function network element.

With reference to the twenty-first aspect, in some implementations of the twenty-first aspect, the requirement information includes correlation information of the data analytics type, and the data request message further includes the correlation information. The application function network element determines the analytics identity based on the correlation information.

According to a twenty-second aspect, a method for obtaining a data analytics result is provided. The method includes: A data analytics network element receives a data request message from an application function network element, where the data request message includes an analytics identity, an identifier of a terminal device, and indication information indicating the data analytics network element to send, to the terminal device, a data analytics result corresponding to a data analytics type, and the analytics identity is used to identify a data analytics type required by the terminal device; and the data analytics network element sends the data analytics result to the terminal device.

Based on the foregoing technical solution, the terminal device sends requirement information to the application function network element, where the requirement information indicates the data analytics type required by the terminal device, so that the application function network element may request, based on the requirement information, the data analytics result from the data analytics network element that can provide the terminal device with the data analytics result corresponding to the data analytics type, and indicate the data analytics network element to send the data analytics result to the terminal device. After obtaining the data analytics result, the terminal device may make a quicker response based on the data analytics result, to assist in improving performance of the terminal device.

In addition, in embodiments of this application, the application function network element requests the data analytics result from the data analytics network element based on a requirement of the terminal device, and the terminal device does not request the data analytics result from the data analytics network element. This avoids a security problem that may be caused by the terminal device requesting the data analytics result. For example, for a pseudo terminal device or a terminal device that is incorrectly used or maliciously hijacked to attack a network, even if the application function network element receives requirement information of such terminal device, the application function network element does not request the data analytics result from the data analytics network element for such terminal device. This can avoid security problems such as information leakage and network congestion caused by obtaining the data analytics result by such terminal device.

With reference to the twenty-second aspect, in some implementations of the twenty-second aspect, the indication information includes a notification identifier.

Correspondingly, based on the notification identifier, the data analytics network element determines to send the data analytics result to the terminal device corresponding to the identifier of the terminal device.

With reference to the twenty-second aspect, in some implementations of the twenty-second aspect, that the data analytics network element sends the data analytics result to the terminal device includes:

The data analytics network element sends the data analytics result to the terminal device in a control plane manner or a user plane manner.

With reference to the twenty-second aspect, in some implementations of the twenty-second aspect, that the data analytics network element sends the data analytics result to the terminal device in a control plane manner or a user plane manner includes: When the data analytics network element establishes a session connection to the terminal device, the data analytics network element sends the data analytics result to the terminal device in the user plane manner; or when the data request message includes an IP address of the terminal device, the data analytics network element sends the data analytics result to the terminal device in the user plane manner; or when the data request message includes a SUPI or a GPSI of the terminal device, the data analytics network element sends the data analytics result to the terminal device in the control plane manner; or when the data request message further includes indication information indicating the data analytics network element to send the data analytics result to the terminal device in the user plane manner, the data analytics network element sends the data analytics result to the terminal device in the user plane manner; or when the data request message further includes indication information indicating the data analytics network element to send the data analytics result to the terminal device in the control plane manner, the data analytics network element sends the data analytics result to the terminal device in the control plane manner.

With reference to the twenty-second aspect, in some implementations of the twenty-second aspect, that the data analytics network element sends the data analytics result to the terminal device in the control plane manner includes: The data analytics network element sends, to a session management network element or an access and mobility management function network element, the data analytics result, the identifier of the terminal device, and the indication information indicating to send the data analytics result to the terminal device.

With reference to the twenty-second aspect, in some implementations of the twenty-second aspect, that the data analytics network element sends the data analytics result to the terminal device in the user plane manner includes: The data analytics network element sends, to a user plane function network element, the data analytics result, the identifier of the terminal device, and the indication information indicating to send the data analytics result to the terminal device; or the data analytics network element sends a downlink data packet to the terminal device through a user plane function network element, where the downlink data packet includes the data analytics result.

With reference to the twenty-second aspect, in some implementations of the twenty-second aspect, that the data analytics network element sends the data analytics result to the terminal device includes: The data analytics network element sends the data analytics result and the analytics identity to the terminal device.

Based on the foregoing technical solution, the data analytics network element sends the analytics identity to the terminal device, so that the terminal device can determine the data analytics type of the data analytics result based on the analytics identity.

With reference to the twenty-second aspect, in some implementations of the twenty-second aspect, the data request message further includes correlation information of the data analytics type, and that the data analytics network element sends the data analytics result to the terminal device includes: The data analytics network element sends the data analytics result and the correlation information to the terminal device.

Based on the foregoing technical solution, the data analytics network element sends the correlation information to the terminal device, so that the terminal device can determine the data analytics type of the data analytics result based on the correlation information.

According to a twenty-third aspect, a method for obtaining a data analytics result is provided. The method includes: A terminal device sends requirement information to an application function network element, where the requirement information indicates a data analytics type required by the terminal device; and the terminal device receives, from a data analytics network element, a data analytics result corresponding to the data analytics type.

Based on the foregoing technical solution, the terminal device sends the requirement information to the application function network element, where the requirement information indicates the data analytics type required by the terminal device, so that the application function network element may request, based on the requirement information, the data analytics result from the data analytics network element that can provide the terminal device with the data analytics result corresponding to the data analytics type, and indicate the data analytics network element to send the data analytics result to the terminal device. After obtaining the data analytics result, the terminal device may make a quicker response based on the data analytics result, to assist in improving performance of the terminal device.

With reference to the twenty-third aspect, in some implementations of the twenty-third aspect, that the terminal device receives, from a data analytics network element, a data analytics result corresponding to the data analytics type includes: The terminal device receives, through a session management network element, an access and mobility management function network element, or a user plane function network element, the data analytics result from the data analytics network element.

With reference to the twenty-third aspect, in some implementations of the twenty-third aspect, the requirement information further includes correlation information of the data analytics type; and that the terminal device receives, from a data analytics network element, a data analytics result corresponding to the data analytics type includes: The terminal device receives the data analytics result from the data analytics network element and the correlation information.

With reference to the twenty-third aspect, in some implementations of the twenty-third aspect, the method further includes: The terminal device receives an analytics identity from the application function network element; and that the terminal device receives, from a data analytics network element, a data analytics result corresponding to the data analytics type includes: The terminal device receives the data analytics result from the data analytics network element and the analytics identity.

According to a twenty-fourth aspect, a communication apparatus is provided. The communication apparatus includes a transceiver unit. The transceiver unit is configured to receive requirement information from a terminal device, where the requirement information indicates a data analytics type required by the terminal device; and the transceiver unit is further configured to send a data request message to a data analytics network element, where the data request message includes an analytics identity, an identifier of the terminal device, and indication information indicating the data analytics network element to send, to the terminal device, a data analytics result corresponding to the data analytics type, and the analytics identity is used to identify the data analytics type.

With reference to the twenty-fourth aspect, in some implementations of the twenty-fourth aspect, the indication information includes a notification identifier.

With reference to the twenty-fourth aspect, in some implementations of the twenty-fourth aspect, the identifier of the terminal device includes a SUPI or a GPSI, and the transceiver unit is further configured to send an IP address of the terminal device to a binding support function network element; and the transceiver unit is further configured to receive the SUPI or the GPSI of the terminal device from the binding support function network element.

With reference to the twenty-fourth aspect, in some implementations of the twenty-fourth aspect, the data request message further includes indication information indicating the data analytics network element to send the data analytics result to the terminal device in a control plane manner or a user plane manner.

With reference to the twenty-fourth aspect, in some implementations of the twenty-fourth aspect, the transceiver unit is further configured to send the identifier of the terminal device and the analytics identity to a unified data management network element; and the transceiver unit is further configured to receive, from the unified data management network element, an identifier of the data analytics network element corresponding to the identifier of the terminal device or an address of the data analytics network element.

With reference to the twenty-fourth aspect, in some implementations of the twenty-fourth aspect, the transceiver unit is further configured to send the analytics identity to the terminal device, where the analytics identity is used by the terminal device to determine the data analytics type of the data analytics result.

With reference to the twenty-fourth aspect, in some implementations of the twenty-fourth aspect, the communication apparatus further includes a processing unit, the requirement information includes correlation information of the data analytics type, and the data request message further includes the correlation information; and the processing unit is configured to determine the analytics identity based on the correlation information.

According to a twenty-fifth aspect, a communication apparatus is provided. The communication apparatus includes a transceiver unit, and the transceiver unit is configured to receive a data request message from an application function network element, where the data request message includes an analytics identity, an identifier of a terminal device, and indication information indicating a data analytics network element to send, to the terminal device, a data analytics result corresponding to a data analytics type, and the analytics identity is used to identify a data analytics type required by the terminal device; and the transceiver unit is further configured to send the data analytics result to the terminal device.

With reference to the twenty-fifth aspect, in some implementations of the twenty-fifth aspect, the indication information includes a notification identifier.

With reference to the twenty-fifth aspect, in some implementations of the twenty-fifth aspect, the transceiver unit is specifically configured to send the data analytics result to the terminal device in a control plane manner or a user plane manner.

With reference to the twenty-fifth aspect, in some implementations of the twenty-fifth aspect, the transceiver unit is specifically configured to: when the data analytics network element establishes a session connection to the terminal device, send the data analytics result to the terminal device in the user plane manner; or when the data request message includes an IP address of the terminal device, send the data analytics result to the terminal device in the user plane manner; or when the data request message includes a SUPI or a GPSI of the terminal device, send the data analytics result to the terminal device in the control plane manner; or when the data request message further includes indication information indicating the data analytics network element to send the data analytics result to the terminal device in the user plane manner, send the data analytics result to the terminal device in the user plane manner; or when the data request message further includes indication information indicating the data analytics network element to send the data analytics result to the terminal device in the control plane manner, send the data analytics result to the terminal device in the control plane manner.

With reference to the twenty-fifth aspect, in some implementations of the twenty-fifth aspect, the transceiver unit is specifically configured to send, to a session management network element or an access and mobility management function network element, the data analytics result, the identifier of the terminal device, and the indication information indicating to send the data analytics result to the terminal device.

With reference to the twenty-fifth aspect, in some implementations of the twenty-fifth aspect, the transceiver unit is specifically configured to: send, to a user plane function network element, the data analytics result, the identifier of the terminal device, and the indication information indicating to send the data analytics result to the terminal device; or send a downlink data packet to the terminal device through a user plane function network element, where the downlink data packet includes the data analytics result.

With reference to the twenty-fifth aspect, in some implementations of the twenty-fifth aspect, the transceiver unit is specifically configured to send the data analytics result and the analytics identity to the terminal device.

With reference to the twenty-fifth aspect, in some implementations of the twenty-fifth aspect, the data request message further includes correlation information of the data analytics type, and the transceiver unit is specifically configured to send the data analytics result and the correlation information to the terminal device.

According to a twenty-sixth aspect, a communication apparatus is provided. The communication apparatus includes a transceiver unit. The transceiver unit is configured to send requirement information to an application function network element, where the requirement information indicates a data analytics type required by a terminal device; and the transceiver unit is further configured to receive, from a data analytics network element, a data analytics result corresponding to the data analytics type.

With reference to the twenty-sixth aspect, in some implementations of the twenty-sixth aspect, the transceiver unit is specifically configured to receive, through a session management network element, an access and mobility management function network element, or a user plane function network element, the data analytics result from the data analytics network element.

With reference to the twenty-sixth aspect, in some implementations of the twenty-sixth aspect, the requirement information further includes correlation information of the data analytics type; and the transceiver unit is specifically configured to receive the data analytics result from the data analytics network element and the correlation information.

With reference to the twenty-sixth aspect, in some implementations of the twenty-sixth aspect, the transceiver unit is further configured to receive an analytics identity from the application function network element; and the transceiver unit is specifically configured to receive the data analytics result from the data analytics network element and the analytics identity.

According to a twenty-seventh aspect, a communication apparatus is provided, including a processor. The processor is coupled to a memory, and may be configured to execute instructions in the memory, to implement the method according to any one of the twenty-first aspect and the possible implementations of the twenty-first aspect. For example, the communication apparatus further includes the memory. For example, the communication apparatus further includes a communication interface, and the processor is coupled to the communication interface.

In an implementation, the communication apparatus is an application function network element. When the communication apparatus is the application function network element, the communication interface may be a transceiver or an input/output interface.

In another implementation, the communication apparatus is a chip disposed in the application function network element. When the communication apparatus is the chip disposed in the application function network element, the communication interface may be an input/output interface.

For example, the transceiver may be a transceiver circuit. For example, the input/output interface may be an input/output circuit.

According to a twenty-eighth aspect, a communication apparatus is provided, including a processor. The processor is coupled to a memory, and may be configured to execute instructions in the memory, to implement the method according to any one of the twenty-second aspect and the possible implementations of the twenty-second aspect. For example, the communication apparatus further includes the memory. For example, the communication apparatus further includes a communication interface, and the processor is coupled to the communication interface.

In an implementation, the communication apparatus is a data analytics network element. When the communication apparatus is the data analytics network element, the communication interface may be a transceiver or an input/output interface.

In another implementation, the communication apparatus is a chip disposed in the data analytics network element. When the communication apparatus is the chip disposed in the data analytics network element, the communication interface may be an input/output interface.

For example, the transceiver may be a transceiver circuit. For example, the input/output interface may be an input/output circuit.

According to a twenty-ninth aspect, a communication apparatus is provided, including a processor. The processor is coupled to a memory, and may be configured to execute instructions in the memory, to implement the method according to any one of the twenty-third aspect and the possible implementations of the twenty-third aspect. For example, the communication apparatus further includes the memory. For example, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

For example, the transceiver may be a transceiver circuit. For example, the input/output interface may be an input/output circuit.

According to a thirtieth aspect, a processor is provided, including an input circuit, an output circuit, and a processing circuit. The processing circuit is configured to: receive a signal through the input circuit, and transmit a signal through the output circuit, so that the processor performs the method according to any one of the possible implementations of the twenty-first aspect to the twenty-third aspect.

During specific implementation, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a thirty-first aspect, a processing apparatus is provided, including a processor and a memory. The processor is configured to: read instructions stored in the memory, receive a signal through a receiver, and transmit a signal through a transmitter, to perform the method according to any one of the possible implementations of the twenty-first aspect to the twenty-third aspect.

For example, there is one or more processors, and there is one or more memories.

For example, the memory may be integrated with the processor, or the memory and the processor are separately disposed.

During specific implementation, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process like sending of indication information may be a process of outputting the indication information from the processor, and receiving of capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus in the thirty-first aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a thirty-second aspect, a computer program product is provided, and the computer program product includes a computer program (which may also be referred to as code or an instruction). When the computer program is run, a computer is enabled to perform the method according to any one of the possible implementations of the twenty-first aspect to the twenty-third aspect.

According to a thirty-third aspect, a computer-readable storage medium is provided. The computer-readable storage medium stores a computer program (which may also be referred to as code or an instruction). When the computer program is run on a computer, the method according to any one of the possible implementations of the twenty-first aspect to the twenty-third aspect is performed.

According to a thirty-fourth aspect, a communication system is provided, including at least two of the foregoing application function network element, the terminal device, and the data analytics network element.

### BRIEF DESCRIPTION OF DRAWINGS

FIG. 1 is a schematic diagram of a communication system to which a method according to an embodiment of this application is applicable;
FIG. 2 is a schematic flowchart of a method according to an embodiment of this application;
FIG. 3 is a schematic flowchart of a method according to an embodiment of this application;
FIG. 4 is a schematic flowchart of a method according to another embodiment of this application;
FIG. 5 is a schematic flowchart of a method according to another embodiment of this application;
FIG. 6A and FIG. 6B are a schematic flowchart of a method according to another embodiment of this application;
FIG. 7 is a schematic flowchart of a method according to another embodiment of this application;
FIG. 8 is a schematic flowchart of a method according to another embodiment of this application;
FIG. 9 is a schematic flowchart of a method according to another embodiment of this application;
FIG. 10 is a schematic flowchart of a method according to another embodiment of this application;
FIG. 11 is a schematic diagram of a communication apparatus according to an embodiment of this application;
FIG. 12 is a schematic block diagram of a communication apparatus according to another embodiment of this application; and
FIG. 13 is a schematic diagram of a chip system according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a 6th generation (6th generation, 6G) system, a future communication system, or the like. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine to machine (machine to machine, M2M) communication system, an Internet of things (Internet of things, IoT) communication system, a vehicle to everything (vehicle to everything, V2X) communication system, an uncrewed aerial vehicle (uncrewed aerial vehicle, UAV) communication system, or another communication system.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

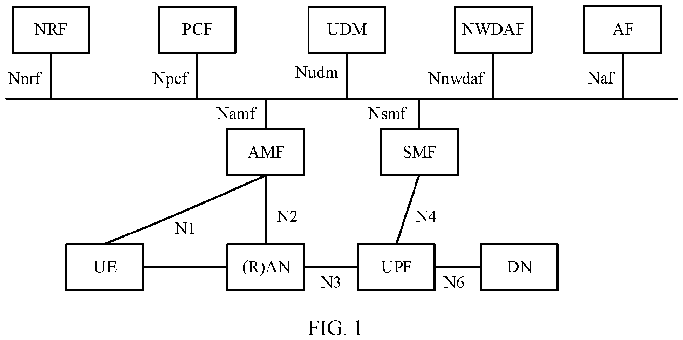

For ease of understanding of embodiments of this application, an application scenario of embodiments of this application is first described in detail with reference to FIG. 1.
1. User equipment (user equipment, UE) may be referred to as a terminal device, a terminal, an access terminal, a subscriber unit, a subscriber station, a mobile station, a mobile console, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, an uncrewed aerial vehicle, a wearable device, a terminal device in a 5G network, a terminal device in an evolved PLMN, or the like. This is not limited in embodiments of this application.
2. An access network (access network, AN) is used to provide a network access function for an authorized user in a specific area, and can use transmission tunnels with different quality based on user levels, service requirements, and the like. The access network may be an access network using different access technologies. Conventional access network technologies include: a radio access network technology used in a 3rd generation (3rd generation, 3G) system, a radio access network technology used in a 4th generation (4th generation, 4G) system, or a next generation radio access network (next generation radio access network, NG-RAN) technology (for example, a radio access network technology used in a 5G system).

An access network that implements an access network function based on a wireless communication technology may be referred to as a radio access network (radio access network, RAN). The radio access network can manage radio resources, provide an access service for a terminal, and further complete forwarding of a control signal and user data between a terminal and a core network.

The radio access network device may be, for example, a base station (NodeB), an evolved NodeB (evolved NodeB, eNB or eNodeB), a next generation Node base station (next generation Node Base station, gNB) in a 5G mobile communication system, a base station in a future mobile communication system, an access point (access point, AP) in a Wi-Fi wireless hotspot system, or the like, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology used by the radio access network device and a specific device form are not limited in embodiments of this application.

3. An access management network element is mainly used for mobility management and access management, is responsible for transferring a user policy between user equipment and a policy control function (policy control function, PCF) network element, and may be configured to implement a function other than session management in a mobility management entity (mobility management entity, MME) function, for example, an access authorization (authentication) function.

In a 5G communication system, the access management network element may be an access and mobility management function (access and mobility management function, AMF) network element. In a future communication system, the access management network element may still be the AMF network element, or may have another name. This is not limited in this application.

4. A session management network element is mainly configured to: manage a session, allocate and manage an Internet protocol (Internet protocol, IP) address of user equipment, select an endpoint that can manage a user plane function interface and a policy control and charging function interface, perform downlink data communication, and the like.

In the 5G communication system, the session management network element may be a session management function (session management function, SMF) network element. In the future communication system, the session management network element may still be the SMF network element, or may have another name. This is not limited in this application.

5. A user plane network element is configured to: perform packet routing and forwarding, perform quality of service (quality of service, QoS) processing on user plane data, complete user plane data forwarding, perform session/flow-level charging statistics collection, implement a bandwidth limiting function, and the like.

In the 5G communication system, the user plane network element may be a user plane function (user plane function, UPF) network element. In the future communication system, the user plane network element may still be the UPF network element, or may have another name. This is not limited in this application.

6. A data network element is configured to provide a network for data transmission.

In the 5G communication system, the data network element may be a data network (data network, DN) element. In the future communication system, the data network element may still be the DN element, or may have another name. This is not limited in this application.

7. A policy control network element is configured to: provide guidance on a unified policy framework for network behavior, provide policy rule information for a control plane function network element (for example, an AMF or SMF network element), and the like.

In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.

8. A data management network element is configured to perform user equipment identification handling, access authentication, registration, mobility management, and the like.

In the 5G communication system, the data management network element may be a unified data management (unified data management, UDM) network element. In the 4G communication system, the data management network element may be a home subscriber server (home subscriber server, HSS) network element. In the future communication system, the data management network element may still be the UDM network element, or may have another name. This is not limited in this application.

9. A network repository function (network repository function, NRF) entity is configured to: store description information of a network function entity and a service provided by the network function entity, and support service discovery, network element entity discovery, and the like.

10. An application function (application function, AF) network element provides an application layer service for the UE. When providing the service for the UE, the AF has a requirement on a QoS policy and a charging (charging) policy, and needs to notify a network. In addition, the AF also needs a core network to feed back application-related information.

11. A network data analytics function (network data analytics function, NWDAF) network element may be configured to: provide data collection, training, and analytics, and distribute an analytics result to another function network element, to help the another function network element optimize corresponding policy control. For example, the NWDAF provides mobility analytics information of a terminal device for the AMF, to assist the AMF in formulating a mobility-related policy, or the NWDAF provides session analytics information of a terminal device for the SMF, to assist the SMF in formulating a session management-related policy, or the NWDAF provides network performance prediction information for the AF, to assist the AF in performing application layer adjustment or the like. In embodiments of this application, the NWDAF may be an independent network element, or may be integrated with another network element. For example, the NWDAF is a functional unit in a core network element.

In FIG. 1, N1, N2, N3, N4, N6, Nnwdaf, Nnrf, Npcf, Nudm, Naf, Namf, and Nsmf are interface serial numbers. For meanings of these interface serial numbers, refer to the meanings defined in the 3GPP standard protocol.

It should be understood that the foregoing network architecture applied to embodiments of this application is merely an example for description, and a network architecture applicable to embodiments of this application is not limited thereto. Any network architecture that can implement the functions of the foregoing network elements is applicable to embodiments of this application.

It should be further understood that the AMF, the SMF, the UPF, the NRF, the PCF, the UDM, the NWDAF, and the like shown in FIG. 1 may be understood as network elements configured to implement different functions in a core network, for example, may be combined as required to form a network slice. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in a 6G network, some or all of the foregoing network elements may still use terms in 5G, or may use other names. A name of an interface between network elements in FIG. 1 is merely an example. In a specific implementation, the name of the interface may be another name. This is not specifically limited in this application. In addition, names of messages (or signaling) transmitted between the foregoing network elements are merely examples, and do not constitute any limitation on functions of the messages.

As described above, the NWDAF analyzes and trains collected data, obtains an analytics result, and then sends the analytics result to another function network element instead of the terminal device.

In view of this, this application provides a method for obtaining a data analytics result, so that a terminal device can obtain the data analytics result.

The following describes in detail the method for obtaining a data analytics result provided in embodiments of this application with reference to a plurality of accompanying drawings.

It may be understood that, for ease of understanding and description, the following uses interaction between devices as an example to describe the method provided in embodiments of this application. However, this should not constitute any limitation on an execution body of the method provided in this application. For example, the first network element shown in the following embodiments may be replaced with a component (for example, a circuit, a chip, or a chip system) configured in the first network element. The terminal device shown in the following embodiments may be replaced with a component (for example, a circuit, a chip, or a chip system) configured in the terminal device.

In addition, for ease of understanding, core network elements such as the SMF, the PCF, the NWDAF, the UPF, the AF, and the AMF are separately shown in the accompanying drawings. However, this should not constitute any limitation on this application. A specific form of the core network element is not limited in this application.

It may be further understood that, in embodiments of this application, related descriptions about sending a message, information, or data by a network element A to a network element B, and receiving, by the network element B, the message, information, or data from the network element A are intended to describe a network element to which the message, information, or data is to be sent. Whether the message, information, or data is directly sent or indirectly sent through another network element is not limited.

It may be further understood that in embodiments of this application, descriptions such as "when", "in a case", and "if" mean that a device (for example, a first network element) performs corresponding processing in an objective situation, are not intended to limit time, do not require the device (for example, the first network element) to perform a determining action during implementation, and do not mean any other limitation.

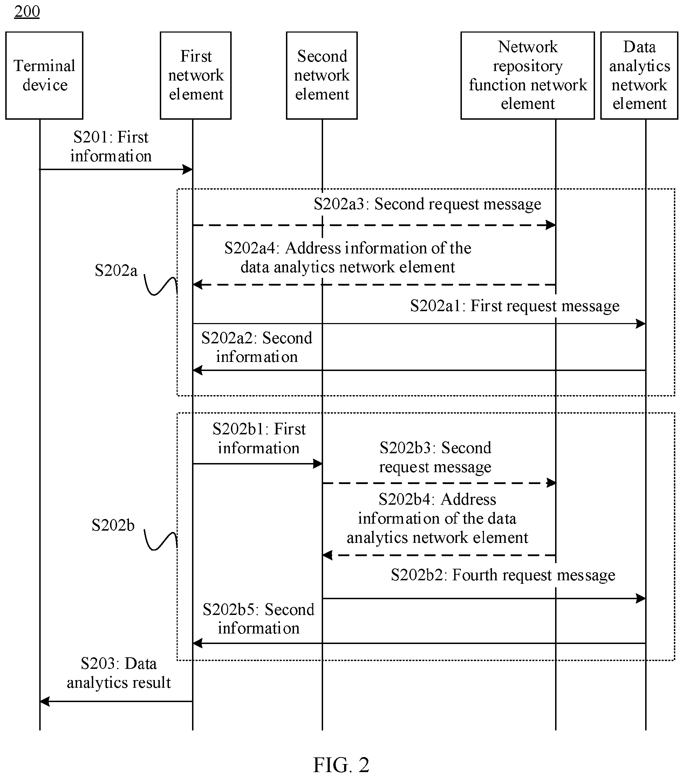

FIG. 2 is a schematic flowchart of a method for obtaining a data analytics result according to an embodiment of this application. As shown in FIG. 2, the method 200 includes S201 to S203.

S201: A first network element receives first information. Correspondingly, in S201, a terminal device sends the first information.

The first information includes an analytics identity (analytics identity, analytics ID), and the analytics ID is used to identify a data analytics type requested by the terminal device. For example, the first information may be named as analytics subscription (analytics subscription) information. It should be noted that the data analytics type requested by the terminal device is a data analytics type that the terminal device is allowed to request, for example, service experience (service experience), terminal mobility (UE mobility), and a slice load level (slice load level).

A manner in which the terminal device obtains the analytics ID is not limited in embodiments of this application.

For example, the analytics ID is preconfigured in the terminal device. For example, one or more analytics IDs (configured or requested analytics IDs) that are allowed to be requested are preconfigured in the terminal device. The terminal device may determine a requested data analytics type based on different requirements, and further determine the analytics ID used to identify the data analytics type.

For another example, the terminal device obtains the analytics ID from a UDM or an AF. For example, subscription information of the terminal device stored by the UDM or the AF includes one or more subscribed analytics IDs (subscribed analytics IDs). The terminal device may obtain the subscription information of the terminal device from the UDM or the AF, and obtain the one or more subscribed analytics IDs included in the subscription information. Further, the terminal device may determine the requested data analytics type based on different requirements, and further determine the analytics ID used to identify the data analytics type.

For example, the first information further includes analytics filter information (analytics filter information) and/or a trigger condition for sending a data analytics result, where the data analytics result corresponds to the data analytics type requested by the terminal device.

The analytics filter information is used to determine a data analytics range. The data analytics range is a range of input data for data analytics, or the data analytics range is a range of raw data used to obtain the data analytics result. For example, the analytics filter information may include one or more of the following: area of interest (area of interest, AOI) information requested by the terminal device, time information, an application identifier (application ID), and the like. The AOI information is used to determine an area for data analytics. For example, the input data for data analytics is collected from an area indicated by the AOI information, and the AOI information may include one or more of the following: a tracing area identifier (tracing area identifier, TAI), a cell identifier (cell ID), a geographical area identifier (geographical area identifier), a network code (network code, NC), a country code (country code, CC), a city code (city code), and a county code (county code). The time information is used to determine time for data analytics. For example, the input data for data analytics is collected within time indicated by the time information. The time information may be relative time, for example, within one hour relative to a specified time point; or the time information may be absolute time, for example, from 00:00 on January 1, 2021 to 24:00 on January 1, 2021. The application identifier indicates an application for data analytics. For example, the input data for data analytics is data related to the application.

The trigger condition for sending the data analytics result includes: a periodicity, a quantity of times, a time period, or the like for sending the data analytics result, and/or an event for sending the data analytics result. For example, the trigger condition for sending the data analytics result includes: notifying the data analytics result when the data analytics result exceeds a preset threshold. For example, the trigger condition for sending the data analytics result may be indicated by an event identifier (event ID).

A manner in which the terminal device sends the first information is not limited in embodiments of this application.

In a possible implementation, the first network element is an access and mobility management function network element, and that the terminal device sends the first information includes: The terminal device sends a registration request (registration request) message to the access and mobility management function network element, where the registration request message includes the first information. Correspondingly, the access and mobility management function network element receives the registration request message from the terminal device.

In a possible implementation, the first network element is an access and mobility management function network element, and that the terminal device sends the first information includes: The terminal device sends a service request (service request) message to the access and mobility management function network element, where the service request message includes the first information. Correspondingly, the access and mobility management function network element receives the service request message from the terminal device.

In another possible implementation, the first network element is a session management network element, and that the terminal device sends the first information includes: The terminal device sends a session establishment request (session establishment request) message to the session management network element, where the session establishment request message includes the first information. Correspondingly, the session management network element receives the session establishment request message from the terminal device. For example, the session establishment request message is a packet data unit (protocol data unit, PDU) session establishment request message.

In still another possible implementation, the first network element is a session management network element, and that the terminal device sends the first information includes: The terminal device sends a session modification request (session modification request) message to the session management network element, where the session modification request message includes the first information. Correspondingly, the session management network element receives the session modification request message from the terminal device. For example, the session modification request message is a PDU session modification request message.

In still another possible implementation, the first network element is a session management network element, and that the terminal device sends the first information includes: The terminal device sends the first information to the session management network element through a user plane function network element. Correspondingly, the session management network element receives the first information from the terminal device through the user plane function network element.

For example, the terminal device sends a user plane uplink data packet to the user plane function network element, where the user plane uplink data packet includes the first information. Further, the user plane function network element parses the user plane uplink data packet to obtain the first information included in the user plane uplink data packet, and sends the first information to the session management network element.

For another example, the terminal device sends a user plane uplink data packet to the user plane function network element, where the user plane uplink data packet includes the first information. Further, the user plane function network element sends the user plane uplink data packet to the session management network element. Further, the session management network element parses the user plane uplink data packet to obtain the first information included in the user plane uplink data packet.

For example, in this implementation, the method 200 further includes: The session management network element receives first indication information from the terminal device, where the first indication information indicates the terminal device to send the first information through a user plane; or the first indication information indicates the terminal device to carry the first information in the user plane uplink data packet. The session management network element sends, based on the first indication information, a packet detection rule (packet detection rule, PDR) corresponding to the first information to the user plane function network element. The PDR is used to assist the user plane function network element in parsing the user plane uplink data packet including the first information, to obtain the first information, and report the first information to the session management network element; or the PDR is used to assist the user plane function network element in sending the user plane uplink data packet including the first information to the session management network element. Alternatively, the PDR corresponds to the user plane uplink data packet including the first information. Correspondingly, after receiving the user plane uplink data packet including the first information, the user plane function network element parses out the first information from the user plane uplink data packet based on the PDR corresponding to the first information, and then sends the first information to the session management network element. Alternatively, the user plane function network element sends the user plane uplink data packet to the session management network element based on the PDR corresponding to the first information.

A specific form of the first indication information is not limited in embodiments of this application. For example, the first indication information explicitly indicates the terminal device to send the first information through the user plane. For example, the first indication information is 1-bit information, and when the first indication information is "0", the first indication information indicates the terminal device to send the first information through the user plane; or when the first indication information is "1", the first indication information indicates the terminal device to send the first information through the user plane. The first indication information may be named as an analytics subscription indication (analytics subscription indication). For another example, the first indication information implicitly indicates the terminal device to send the first information through the user plane. For example, the first indication information is a preset data network name (data network name, DNN) and/or single network slice selection assistance information (single network slice selection assistance information, S-NSSAI). If a PDU session establishment/modification request message sent by the terminal device to the session management network element includes the preset DNN and/or the S-NSSAI, the session management network element determines, based on the preset DNN and/or the S-NSSAI, that the terminal device sends the first information through the user plane.

In still another possible implementation, the first network element is a user plane function network element, and that the terminal device sends the first information includes: The terminal device sends a user plane uplink data packet to the user plane function network element, where the user plane uplink data packet includes the first information. Correspondingly, the user plane function network element receives the user plane uplink data packet from the terminal device. Further, the user plane function network element parses the user plane uplink data packet to obtain the first information included in the user plane uplink data packet.

In yet another possible implementation, the first network element is an application function network element, and that the terminal device sends the first information includes: The terminal device sends an application layer uplink data packet to the application function network element, where the application layer uplink data packet includes the first information. Correspondingly, the application function network element receives the application layer uplink data packet from the terminal device. Further, the application function network element parses the application layer uplink data packet to obtain the first information included in the application layer uplink data packet.

Further, the first network element obtains the data analytics result corresponding to the data analytics type.

A manner in which the first network element obtains the data analytics result is not limited in embodiments of this application.

In a possible implementation, S202a in the method 200 is performed. The first network element requests the data analytics result from a data analytics network element based on the first information. For example, S202a includes S202a1 to S202a4.

S202al: The first network element sends a first request message to the data analytics network element. Correspondingly, in S202a1, the data analytics network element receives the first request message from the first network element.

The first request message includes the analytics ID, and the first request message is used to request the data analytics result corresponding to the data analytics type identified by the analytics ID. It should be noted that, in S202a1, the first network element sends the first request message to the data analytics network element that supports the data analytics type identified by the analytics ID.

For example, if the first information further includes the analytics filter information and/or the trigger condition for sending the data analytics result, the first request message further includes the analytics filter information and/or the trigger condition for sending the data analytics result. It should be noted that, if the first information includes the analytics filter information, in S202a1, the first network element sends the first request message to the data analytics network element that supports the data analytics type identified by the analytics ID and whose analytics service range meets the analytics filter information. That the analytics service range of the data analytics network element meets the analytics filter information means that the data analytics network element supports providing the data analytics result based on the data analytics range determined by using the analytics filter information. For example, if the analytics filter information includes the AOI information, the data analytics network element supports providing a data analytics result corresponding to the AOI. In other words, the data analytics network element provides a service for the AOI.

For example, the first request message further includes a first identifier, and the first identifier corresponds to an identifier of the terminal device. The identifier of the terminal device is used to uniquely identify the terminal device. For example, the identifier of the terminal device may be one or more of the following: an Internet protocol (Internet protocol, IP) address, a subscription permanent identifier (subscription permanent identifier, SUPI), a permanent equipment identifier (permanent equipment identifier, PEI), a generic public subscription identifier (generic public subscription identifier, GPSI), an international mobile subscriber identifier (international mobile subscriber identifier, IMSI), an international mobile equipment identity (international mobile equipment identity, INMI), and a mobile station international integrated service digital network number (mobile station international integrated service digital network number, MSISDN). The first identifier may be generated by the first network element. To be specific, after receiving the first information from the terminal device, the first network element generates, based on the first information, the first identifier corresponding to the identifier of the terminal device. For example, the first identifier may be named as a notification correlation ID (notification correlation ID). Further, the first network element stores a correspondence between the first identifier and the identifier of the terminal device.

For example, the first request message further includes the identifier of the terminal device. The identifier of the terminal device indicates, to the data analytics network element, that the data analytics result requested by the first request message is requested by the terminal device.

For example, the first request message is a subscription request message, and the subscription request message is used to subscribe to the data analytics result. For example, the first network element may invoke an NWDAF service-based interface_analytics subscription service_subscribe operation (Nnwdaf_AnalyticsSubscription_Subscribe) service, to subscribe to the data analytics result.

For another example, the first request message is an instant request message, and the instant request message is used to instantly request the data analytics result. For example, the first network element may invoke an NWDAF service-based interface_analytics information service_request operation (Nnwdaf_AnalyticsInfo_Request) service, to request the data analytics result.

For example, when the first network element is an application function network element, the first request message further includes the SUPI or the GPSI of the terminal device. If the application function network element does not obtain the SUPI or the GPSI of the terminal device in advance, the method 200 further includes: The application function network element sends a third request message to a binding support function network element, where the third request message includes the IP address of the terminal device. The third request message is used to request a SUPI or a GPSI corresponding to the IP address of the terminal device. The binding support function network element sends a response message of the third request message to the application function network element, where the response message includes the SUPI or the GPSI of the terminal device, and the SUPI or the GPSI of the terminal device corresponds to the IP address of the terminal device. It should be noted that the application layer uplink data packet sent by the terminal device to the application function network element includes the IP address of the terminal device.

For example, after the first network element sends the first request message to the data analytics network element, the method 200 further includes: The first network element sends second indication information to the terminal device, where the second indication information indicates the terminal device that the requested data analytics result has been subscribed to. For example, the second indication information may be named as a subscription completion indicator (subscription completion indicator) or an accept subscription indicator (accept subscription indicator).

For example, the first network element is an access and mobility management function network element, and that the first network element sends second indication information to the terminal device includes: The access and mobility management function network element sends a registration accept (registration accept) message to the terminal device, where the registration accept message includes the second indication information.

For another example, the first network element is a session management network element, and that the first network element sends second indication information to the terminal device includes: The session management network element sends a session establishment/modification accept (session establishment/modification accept) message to the terminal device, where the session establishment/modification accept message includes the second indication information. For example, the session establishment/modification accept message is a PDU session establishment/modification accept message.

S202a2: The data analytics network element sends second information to the first network element. Correspondingly, the first network element receives the second information from the data analytics network element.

The second information includes the data analytics result.

For example, if the first request message includes the first identifier, the second information further includes the first identifier.

After receiving the first request message from the first network element, the data analytics network element first determines whether the data analytics result requested by the first request message already exists locally. If the data analytics result requested by the first request message already exists locally, the data analytics network element directly sends the data analytics result to the first network element. Otherwise, the data analytics network element collects data from a corresponding network element based on the first request message, and performs a process like model training and/or model inference on the collected data, to obtain the data analytics result requested by the first request message. Finally, the data analytics network element sends the obtained data analytics result to the first network element.

For example, if the first request message includes the identifier of the terminal device, the data analytics network element collects data related to the terminal device, and performs a process like model training and/or model inference on the collected data, to obtain the data analytics result.

For example, if the first request message includes the trigger condition for sending the data analytics result, the data analytics network element sends the second information to the first network element based on the trigger condition. For example, if the trigger condition includes the periodicity for sending the data analytics result, the data analytics network element periodically sends the second information to the first network element. For another example, if the trigger condition includes sending the data analytics result when the data analytics result exceeds the preset threshold, the data analytics network element sends the second information to the first network element when the data analytics result exceeds the preset threshold.

For example, if the first network element subscribes to the data analytics result by invoking the NWDAF service-based interface_analytics subscription service_subscribe operation (Nnwdaf_AnalyticsSubscription_Subscribe) service, the data analytics network element may send the second information to the first network element by invoking an NWDAF service-based interface_analytics subscription service_notify operation (Nnwdaf_AnalyticsSubscription_notify) service.

For another example, if the first network element requests the data analytics result by invoking the NWDAF service-based interface_analytics information service_request operation (Nnwdaf_AnalyticsInfo _Request) service, the data analytics network element may send the second information to the first network element by invoking an NWDAF service-based interface_analytics information service _request response operation (Nnwdaf_AnalyticsInfo_Request Response) service.

For example, in S202a2, the data analytics network element sends a response message of the first request message to the first network element, where the response message of the first request message includes the first information.

As described above, in S202a1, the first network element sends the first request message to the data analytics network element that supports the data analytics type requested by the terminal device. If the first network element does not obtain address information of the data analytics network element before S202a1, the method 200 further includes S202a3 and S202a4.

S202a3: The first network element sends a second request message to a network repository function network element. Correspondingly, in S202a3, the network repository function network element receives the second request message from the first network element.

The second request message is used to request to discover the data analytics network element, and the second request message includes the analytics ID. In other words, the second request message is used to request to discover the data analytics network element that supports the data analytics type identified by the analytics ID.

For example, the second request message further includes location area information. In other words, the second request message is used to request to discover the data analytics network element that supports the data analytics type identified by the analytics ID and provides a service for a location area identified by the location area information. The location area information is determined based on the analytics filter information or location information of the terminal device. For example, if the first information includes the analytics filter information, and the analytics filter information includes the AOI information, the location area information is the AOI information. If the first information does not include the analytics filter information, or the analytics filter information does not include the AOI information, the location area information is the location information of the terminal device.

For example, if the first information includes the analytics filter information, the first network element may further carry the analytics filter information in the second request message and send the second request message to the network repository function network element. In other words, the second request message is used to request to discover the data analytics network element that supports the data analytics type identified by the analytics ID and whose analytics service range meets the analytics filter information.

For example, the first network element may request to discover the data analytics network element by invoking an NRF service-based interface_network function discovery _request operation (Nnrf_NFDiscovery_Request) service.

S202a4: The network repository function network element sends the address information of the data analytics network element to the first network element. Correspondingly, in S202a4, the first network element receives the address information of the data analytics network element from the network repository function network element.

For example, the network repository function network element may send the address information of the data analytics network element to the first network element by invoking an NRF service-based interface_network function discovery _request response operation (Nnrf_NFDiscovery_Request Response) service.

Correspondingly, after receiving the address information of the data analytics network element, the first network element sends the first request message to the data analytics network element based on the address information of the data analytics network element.

In another possible implementation, S202b in the method 200 is performed. The first network element forwards the first information to the second network element, and the second network element requests the data analytics network element to send the data analytics result to the first network element. For example, in this implementation, that the first network element obtains the data analytics result includes S202b1 to S202b5.

S202b1: The first network element sends the first information to a second network element. Correspondingly, in S202b1, the second network element receives the first information from the first network element.

For example, the first network element is a user plane function network element, the first information is included in a user plane uplink data packet received by the user plane function network element from the terminal device, and the second network element is a session management network element. That the first network element sends the first information to a second network element includes: The first network element sends the user plane uplink data packet to the second network element. Alternatively, that the first network element sends the first information to a second network element includes: The first network element parses out the first information from the user plane uplink data packet, and the first network element sends the first information to the second network element.

For example, when the first network element is a user plane function network element and the second network element is a session management network element, the method 200 further includes: The session management network element receives the first indication information from the terminal device, where the first indication information indicates the terminal device to send the first information through the user plane. The session management network element sends, based on the first indication information, the PDR corresponding to the first information to the user plane function network element. The PDR is used to: assist the user plane function network element in parsing the user plane uplink data packet including the first information, to obtain the first information, and then send the first information to the session management network element. Correspondingly, after receiving the user plane uplink data packet including the first information, the user plane function network element first parses out the first information from the user plane uplink data packet, and then sends the first information to the session management network element. Alternatively, the PDR sent by the session management network element to the user plane function network element is used to assist the user plane function network element in sending, to the session management network element, the user plane uplink data packet including the first information. Correspondingly, after receiving the user plane uplink data packet including the first information, the user plane function network element sends the user plane uplink data packet to the session management network element based on the PDR corresponding to the first information.

S202b2: The second network element sends a fourth request message to the data analytics network element. Correspondingly, in S202b2, the data analytics network element receives the fourth request message from the second network element.

The fourth request message is used to request the data analytics network element to send the data analytics result to the first network element, the fourth request message includes the analytics ID and address information of the first network element, and the address information of the first network element is used to receive the data analytics result sent by the data analytics network element. It should be noted that, in S202b2, the second network element sends the fourth request message to the data analytics network element that supports the data analytics type identified by the analytics ID.

For example, if the first information further includes the analytics filter information and/or the trigger condition for sending the data analytics result, the fourth request message further includes the analytics filter information and/or the trigger condition for sending the data analytics result. It should be noted that, if the first information includes the analytics filter information, in S202b2, the second network element sends the fourth request message to the data analytics network element that supports the data analytics type identified by the analytics ID and whose analytics service range meets the analytics filter information. If the analytics service range of the data analytics network element meets the analytics filter information, the data analytics network element supports providing the data analytics result based on the data analytics range determined by the analytics filter information. For example, if the analytics filter information includes the AOI information, the data analytics network element supports a data analytics result corresponding to the AOI. In other words, the data analytics network element provides a service for the AOI.

For example, the fourth request message further includes the first identifier, and the first identifier corresponds to the identifier of the terminal device. For more descriptions of the identifier of the terminal device, refer to S202a1. The first identifier may be generated by the second network element. In other words, after receiving the first information from the first network element, the second network element generates, based on the first information, the first identifier corresponding to the identifier of the terminal device.

For example, the fourth request message further includes the identifier of the terminal device. The identifier of the terminal device indicates, to the data analytics network element, that the data analytics result requested by the fourth request message is requested by the terminal device.

For example, the fourth request message is a subscription request message, and the subscription request message is used to subscribe to the data analytics result. For example, the second network element may invoke the NWDAF service-based interface_analytics subscription service_subscribe operation (Nnwdaf_AnalyticsSubscription_Subscribe) service, to subscribe to the data analytics result.

For another example, the fourth request message is an instant request message, and the instant request message is used to instantly request the data analytics result. For example, the second network element may invoke the NWDAF service-based interface_analytics information service_request operation (Nnwdaf_AnalyticsInfo _Request) service, to request the data analytics result.

For example, the method 200 further includes: The second network element sends third information to the first network element, where the third information includes the address information of the data analytics network element. For example, if the fourth request message further includes the first identifier, the third information further includes the first identifier. Correspondingly, after receiving the third information, the first network element stores the correspondence between the first identifier and the identifier of the terminal device.

As described above, the second network element sends the fourth request message to the data analytics network element that supports the data analytics type requested by the terminal device. If the second network element does not obtain the address information of the data analytics network element before S202b2, the method 200 further includes S202b3 and S202b4.

S202b3: The second network element sends a second request message to the network repository function network element. Correspondingly, in S202b3, the network repository function network element receives the second request message from the second network element.

The second request message is used to request to discover the data analytics network element, and the second request message includes the analytics ID. In other words, the second request message is used to request to discover the data analytics network element that supports the data analytics type identified by the analytics ID.

For example, the second request message further includes location area information. In other words, the second request message is used to request to discover the data analytics network element that supports the data analytics type identified by the analytics ID and provides a service for a location area identified by the location area information. The location area information is determined based on the analytics filter information or location information of the terminal device. For example, if the first information includes the analytics filter information, and the analytics filter information includes the AOI information, the location area information is the AOI information. If the first information does not include the analytics filter information, or the analytics filter information does not include the AOI information, the location area information is the location information of the terminal device.

For example, if the first information includes the analytics filter information, the second network element may further carry the analytics filter information in the second request message and send the second request message to the network repository function network element. In other words, the second request message is used to request to discover the data analytics network element that supports the data analytics type identified by the analytics ID and whose analytics service range meets the analytics filter information.

For example, the second network element may request to discover the data analytics network element by invoking the NRF service-based interface_network function discovery _request operation (Nnrf_NFDiscovery_Request) service.

S202b4: The network repository function network element sends the address information of the data analytics network element to the second network element. Correspondingly, in S202b4, the second network element receives the address information of the data analytics network element from the network repository function network element.

For example, the network repository function network element may send the address information of the data analytics network element to the second network element by invoking the NRF service-based interface_network function discovery _request response operation (Nnrf_NFDiscovery_Request Response) service.

Correspondingly, after receiving the address information of the data analytics network element, the second network element sends the fourth request message to the data analytics network element based on the address information of the data analytics network element.

S202b5: The data analytics network element sends the second information to the first network element. Correspondingly, in S202b5, the first network element receives the second information from the data analytics network element.

The second information includes the data analytics result.

For example, if the fourth request message includes the first identifier, the second information further includes the first identifier and the address information of the data analytics network element.

After receiving the fourth request message from the second network element, the data analytics network element first determines whether the data analytics result requested by the fourth request message already exists locally, and if the data analytics result requested by the fourth request message already exists locally, the data analytics network element directly sends the data analytics result to the first network element; otherwise, the data analytics network element collects data from a corresponding network element based on the fourth request message, and performs a process like model training and/or model inference on the collected data, to obtain the data analytics result requested by the fourth request message, and finally, the data analytics network element sends the obtained data analytics result to the first network element.

For example, if the fourth request message includes the identifier of the terminal device, the data analytics network element collects data related to the terminal device, and performs a process like model training and/or model inference on the collected data, to obtain the data analytics result.

For example, if the fourth request message includes the trigger condition for sending the data analytics result, the data analytics network element sends the second information to the first network element based on the trigger condition. For example, if the trigger condition includes the periodicity for sending the data analytics result, the data analytics network element periodically sends the second information to the first network element. For another example, if the trigger condition includes sending the data analytics result when the data analytics result exceeds a threshold, the data analytics network element sends the second information to the first network element when the data analytics result exceeds the preset threshold.

For example, if the second network element subscribes to the data analytics result by invoking the NWDAF service-based interface_analytics subscription service_subscribe operation (Nnwdaf_AnalyticsSubscription_Subscribe) service, the data analytics network element may send the second information to the first network element by invoking the NWDAF service-based interface_analytics subscription service_notify operation (Nnwdaf_AnalyticsSubscription_notify) service.

For another example, if the second network element requests the data analytics result by invoking the NWDAF service-based interface_analytics information service_request operation (Nnwdaf_AnalyticsInfo_Request) service, the data analytics network element may send the second information to the first network element by invoking the NWDAF service-based interface_analytics information service_request response operation (Nnwdaf_AnalyticsInfo_Request Response) service.

For another example, when the first network element is a user plane function network element, the data analytics network element may send a downlink data packet to the first network element, where the downlink data packet includes the second information, that is, the downlink data packet includes the data analytics result. For example, the downlink data packet further includes the first identifier and the address information of the data analytics network element. An example in which the downlink data packet includes the address information of the data analytics network element is that a source address of the downlink data packet is an address of the data analytics network element.

S203: The first network element sends the data analytics result to the terminal device. Correspondingly, in S203, the terminal device receives the data analytics result from the first network element.

In a possible implementation, once receiving the second information from the data analytics network element, the first network element sends, to the terminal device, the data analytics result included in the second information.

In another possible implementation, if the second information includes the first identifier, the first network element determines, based on the correspondence between the first identifier and the identifier of the terminal device, to send the data analytics result to the terminal device. It may be understood that the first network element stores the correspondence between the first identifier and the identifier of the terminal device.

In still another possible implementation, if the second information includes the first identifier and the address information of the data analytics network element, the first network element determines, based on the correspondence between the first identifier and the identifier of the terminal device when determining that the address information of the data analytics network element included in the second information and the address information of the data analytics network element included in the third information are the same, to send the data analytics result to the terminal device.

For example, the first network element is an access and mobility management function network element, and the first network element sends the data analytics result to the terminal device through a path of access and mobility management function network element-access network device-terminal device. In other words, the access and mobility management function network element sends the data analytics result to the access network device, and the access network device sends the data analytics result to the terminal device. For example, that the first network element sends the data analytics result to the terminal device includes: The first network element sends a registration accept (registration accept) message to the terminal device, where the registration accept message includes the data analytics result.

For example, the method 200 further includes: The terminal device sends third indication information to the first network element, where the third indication information indicates whether the data analytics result is successfully received. For example, the terminal device sends the third indication information to the first network element through a path of terminal device-access network device-access and mobility management function network element.

For another example, the first network element is a session management network element, and the first network element sends the data analytics result to the terminal device through a session modification command (session modification command) message. In other words, the first network element sends the session modification command message to the terminal device, where the session modification command message includes the data analytics result. For example, the session management network element sends an N1 session management (session management, SM) container (container) to the access and mobility management function network element by invoking an AMF service-based interface_communication_N1N2 message transfer operation (Namf_Communication_N1N2MessageTransfer) service, where the N1 SM container includes a PDU session modification command, and the PDU session modification command includes the data analytics result. Then, the access and mobility management function network element transparently transmits the N1 SM container to the terminal device.

For another example, the first network element is a session management network element, and the first network element sends the data analytics result to the terminal device through a session establishment accept (session establishment accept) message. In other words, the first network element sends the session establishment accept message to the terminal device, where the session establishment accept message includes the data analytics result. For example, the session establishment accept message is a PDU session establishment accept message.

For example, the method 200 further includes: The terminal device sends the third indication information to the first network element. For example, the terminal device sends a PDU session modification command acknowledgment (acknowledgment, ACK) to the session management network element through a non-access stratum (non-access stratum, NAS) message, where the PDU session modification command acknowledgment indicates that the data analytics result is successfully received.

For another example, the first network element is a user plane function network element, and the first network element sends the data analytics result to the terminal device through a user plane downlink data packet. In other words, the first network element sends the user plane downlink data packet to the terminal device, where the user plane downlink data packet includes the data analytics result.

For another example, the first network element is an application function network element, and the first network element sends the data analytics result to the terminal device through an application layer downlink data packet. In other words, the first network element sends the application layer downlink data packet to the terminal device, where the application layer downlink data packet includes the data analytics result.

For example, if the terminal device is in an idle (IDLE) mode after the first network element obtains the data analytics result from the data analytics network element, a network side triggers a service request, to page the terminal device. After the network side pages the terminal device, the first network element sends the data analytics result to the terminal device.

In this embodiment of this application, the terminal device sends the first information to the first network element, where the first information includes the analytics ID used to identify the data analytics type requested by the terminal device, so that the first network element may obtain, based on the first information from the data analytics network element, the data analytics result corresponding to the data analytics type, and send the data analytics result to the terminal device. After obtaining the data analytics result, the terminal device may make a quicker response based on the data analytics result, to assist in improving performance of the terminal device.

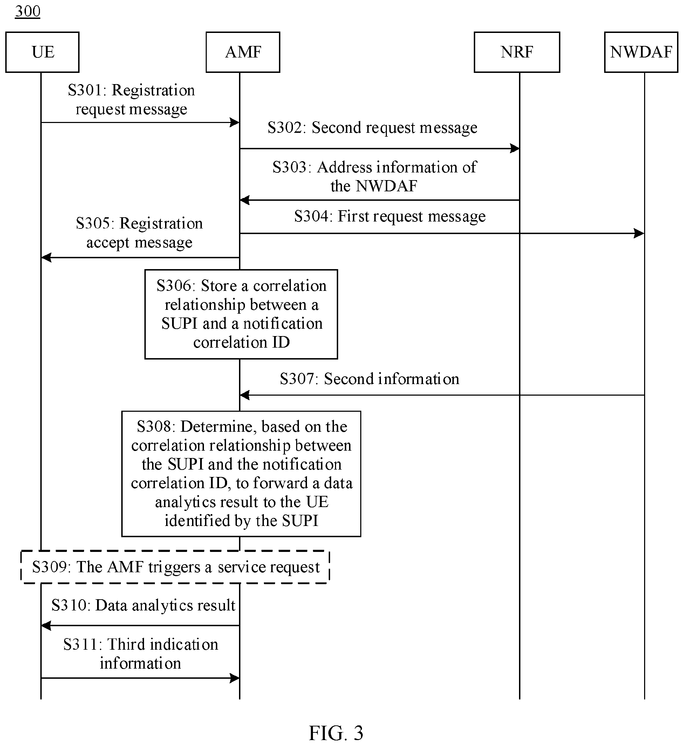

The following describes different implementations of the method 200 with reference to FIG. 3 to FIG. 8.

FIG. 3 is a schematic flowchart of a method for obtaining a data analytics result according to an embodiment of this application. In FIG. 3, an example in which a first network element is an access and mobility management function network element (denoted as an AMF in the following) is used to describe a method in which a terminal device (denoted as UE in the following) obtains a data analytics result from a data analytics network element (denoted as NWDAF in the following) through the AMF. As shown in FIG. 3, the method 300 includes S301 to S311. Each step is described in detail below.

S301: The UE sends a registration request message to the AMF.

The registration request message includes an analytics ID and a SUPI. The analytics ID is used to identify a data analytics type requested by the UE, and the SUPI is used to identify the UE. For a manner in which the UE obtains the analytics ID, refer to the description in S210.

For example, the registration request message further includes analytics filter information and/or a trigger condition for sending the data analytics result. For descriptions of the analytics filter information and the trigger condition for sending the data analytics result, refer to the foregoing S210.

S302: The AMF sends a second request message to a network repository function network element (denoted as an NRF in the following).

For details, refer to the description in S202a3.

S303: The NRF sends address information of the NWDAF to the AMF.

S304: The AMF sends a first request message to the NWDAF.

The first request message includes the analytics ID and a notification correlation ID (namely, a first identifier), and the first request message is used to request the data analytics result corresponding to the data analytics type identified by the analytics ID.

For example, the first request message further includes the analytics filter information and/or the trigger condition for sending the data analytics result.

For example, the first request message further includes the SUPI.

For more descriptions of the first request message, refer to the description in S202a1.

S305: The AMF sends a registration accept message to the UE.

The registration accept message includes a subscription completion indication, where the subscription completion indication indicates the UE that the requested data analytics type has been subscribed to.

S306: The AMF stores a correlation relationship between the SUPI and the notification correlation ID.

S307: The NWDAF sends second information to the AMF.

The second information includes the data analytics result and the notification correlation ID.

For example, the second information further includes the analytics ID.

S308: The AMF determines, based on the correlation relationship between the SUPI and the notification correlation ID, to forward the data analytics result to the UE identified by the SUPI.

For example, if the UE is in an idle mode, the method 300 further includes S309. The AMF triggers a service request to page the UE.

S310: The AMF sends the data analytics result to the UE.

For example, the AMF sends the data analytics result to the UE through a path of AMF-RAN-UE.

S311: The UE sends third indication information to the AMF.

The third indication information indicates whether the terminal device successfully receives the data analytics result. For example, the UE sends the third indication information to the AMF through a path of UE-RAN-AMF.

It should be noted that, for example, S305 and S310 are described as two independent steps in the method 300. Alternatively, S305 and S310 may be performed together. In other words, the AMF may carry the data analytics result in the registration accept message and send the registration accept message to the UE.

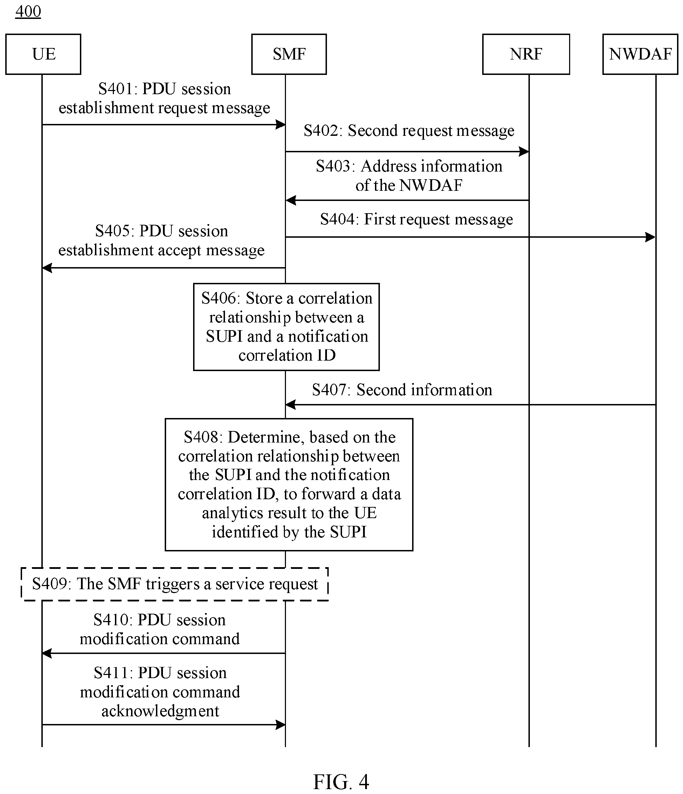

FIG. 4 is a schematic flowchart of a method for obtaining a data analytics result according to an embodiment of this application. In FIG. 4, an example in which a first network element is a session management function network element (denoted as an SMF in the following) is used to describe a method in which a terminal device (denoted as UE in the following) obtains a data analytics result from a data analytics network element (denoted as NWDAF in the following) through the SMF. As shown in FIG. 4, the method 400 includes S401 to S411. Each step is described in detail below.

S401: The UE sends a PDU session establishment request message to the SMF.

The PDU session establishment request message includes an analytics ID and a SUPI. The analytics ID is used to identify a data analytics type requested by the UE, and the SUPI is used to identify the UE. For a manner in which the UE obtains the analytics ID, refer to the description in S210.

For example, the PDU session establishment request message further includes analytics filter information and/or a trigger condition for sending the data analytics result. For descriptions of the analytics filter information and the trigger condition for sending the data analytics result, refer to S210.

S402: The SMF sends a second request message to a network repository function network element (denoted as an NRF in the following).

For details, refer to the description in S202a3.

It should be noted that, if the second request message sent by the SMF to the NRF includes location area information, and the location area information is location information of the UE, the SMF may obtain the location information of the UE from the AMF.

S403: The NRF sends address information of the NWDAF to the SMF.

S404: The SMF sends a first request message to the NWDAF.

The first request message includes the analytics ID and a notification correlation ID, and the first request message is used to request the data analytics result corresponding to the data analytics type identified by the analytics ID.

For example, the first request message further includes the analytics filter information and/or the trigger condition for sending the data analytics result.

For example, the first request message further includes the SUPI.

For more descriptions of the first request message, refer to the description in S202a1.

S405: The SMF sends a PDU session establishment accept message to the UE.

The PDU session establishment accept message includes a subscription completion indication, where the subscription completion indication indicates the UE that the requested data analytics type has been subscribed to.

S406: The SMF stores a correlation relationship between the SUPI and the notification correlation ID.

S407: The NWDAF sends second information to the SMF.

The second information includes the data analytics result and the notification correlation ID.

For example, the second information further includes the analytics ID.

S408: The SMF determines, based on the correlation relationship between the SUPI and the notification correlation ID, to forward the data analytics result to the UE identified by the SUPI.

For example, if the UE is in an idle mode, the method 400 further includes S409. The SMF triggers a service request to page the UE.

S410: The SMF sends a PDU session modification command to the UE.

The PDU session modification command includes the data analytics result.

S411: The UE sends a PDU session modification command acknowledgment to the SMF.

The PDU session modification command acknowledgment indicates that the data analytics result is successfully received.

For example, in S411, if the UE does not successfully receive the data analytics result, the UE may send a PDU session modification command negative acknowledgment (negative acknowledgment, NACK) to the SMF, to indicate that the data analytics result is not successfully received.

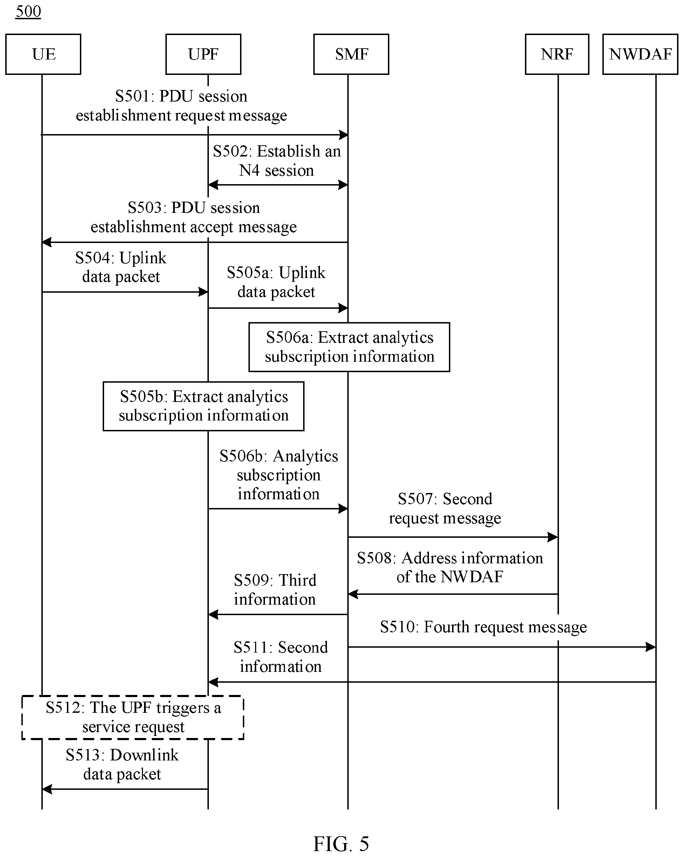

FIG. 5 is a schematic flowchart of a method for obtaining a data analytics result according to an embodiment of this application. In FIG. 5, an example in which a first network element is a user plane function network element (denoted as a UPF in the following) is used to describe a method in which a terminal device (denoted as UE in the following) obtains a data analytics result from a data analytics network element (denoted as NWDAF in the following) through the UPF. As shown in FIG. 5, the method 500 includes S501 to S513. Each step is described in detail below.

S501: The UE sends a PDU session establishment request message to a session management function network element (denoted as an SMF in the following).

The PDU session establishment request message includes first indication information, and the first indication information indicates the UE to send analytics subscription information through a user plane. For more descriptions of the first indication information, refer to S210.

S502: The SMF and the UPF establish an N4 session.

Specifically, the SMF sends an N4 session establishment request (N4 session establishment request) message to the UPF. The N4 session establishment request message includes a PDR corresponding to the analytics subscription information, and the PDR is used to assist the UPF in sending, to the SMF, a user plane uplink data packet that includes the analytics subscription information. For example, the PDR includes a correspondence between a QFI and address information of the SMF, and the QFI is used to identify a QoS flow of a session for which the UE sends the analytics subscription information and receives the data analytics result.

Correspondingly, the UPF sends an N4 session establishment response (N4 session establishment response) message to the SMF.

S503: The SMF sends a PDU session establishment accept message to the UE.

S504: The UE sends an uplink data packet to the UPF.

The uplink data packet includes an analytics ID. The analytics ID is used to identify a data analytics type requested by the UE. For a manner in which the UE obtains the analytics ID, refer to the description in S210.

For example, registration request message further includes analytics filter information and/or a trigger condition for sending the data analytics result. For descriptions of the analytics filter information and the trigger condition for sending the data analytics result, refer to S201.

Further, S505a and S506a or S505b and S506b in the method 500 are performed.

S505a: The UPF sends the uplink data packet to the SMF.

Specifically, the UPF sends the uplink data packet to the SMF based on the PDR received in S502, where the uplink data packet includes the analytics subscription information. For example, if the PDR includes the correspondence between the QFI and the address information of the SMF, the UPF determines, based on the correspondence between the QFI of the QoS flow of the uplink data packet and the address information of the SMF, to send the uplink data packet to the SMF.

S506a: The SMF extracts the analytics subscription information.

The SMF parses the uplink data packet and extracts the analytics subscription information from the uplink data packet. In other words, the SMF extracts the analytics ID, the analytics filter information, and the trigger condition for sending the data analytics result that are included in the uplink data packet.

S505b: The UPF extracts the analytics subscription information.

The UPF parses the uplink data packet and extracts the analytics subscription information from the uplink data packet. In other words, the UPF extracts the analytics ID, the analytics filter information, and the trigger condition for sending the data analytics result that are included in the uplink data packet.

Specifically, the UPF parses the uplink data packet based on the PDR received in S502.

S506b: The UPF sends the analytics subscription information to the SMF.

Specifically, the UPF sends the analytics subscription information to the SMF based on the PDR received in S502. For example, if the PDR includes the correspondence between the QFI and the address information of the SMF, the UPF determines, based on the correspondence between the QFI of the QoS flow of the uplink data packet and the address information of the SMF, to send the analytics subscription information included in the uplink data packet to the SMF.

S507: The SMF sends a second request message to a network repository function network element (denoted as an NRF in the following).

For details, refer to the description in S202a3.

S508: The NRF sends address information of the NWDAF to the SMF.

S509: The SMF sends third information to the UPF.

The third information includes a notification correlation ID and the address information of the NWDAF.

Correspondingly, the UPF stores a correlation relationship between the notification correlation ID and a SUPI, where the SUPI is used to identify the UE.

S510: The SMF sends a fourth request message to the NWDAF.

The fourth request message includes the analytics ID, the notification correlation ID, and address information of the UPF. The fourth request message is used to request to send the data analytics result corresponding to the data analytics type identified by the analytics ID to the UPF. The address information of the UPF is used to receive the data analytics result sent by the NWDAF.

For example, the fourth request message further includes the analytics filter information and/or the trigger condition for sending the data analytics result.

For example, the fourth request message further includes the SUPI.

For more descriptions of the fourth request message, refer to the description in S202b2.

S511: The NWDAF sends second information to the UPF.

The NWDAF sends the second information to the UPF based on the address information of the UPF included in the fourth request message, where the second information includes the data analytics result, the notification correlation ID, and the address information of the NWDAF.

For example, the second information further includes the analytics ID.

Correspondingly, after the UPF receives the second information, if the address information of the NWDAF included in the second information is consistent with the address information of the NWDAF included in the third information, the UPF then determines, based on the correlation relationship between the SUPI and the notification correlation ID, to send the data analytics result to the UE identified by the SUPI.

For example, if the UE is in an idle mode, the method 500 further includes S512. The UPF triggers a service request to page the UE.

S513: The UPF sends a downlink data packet to the UE.

The downlink data packet includes the data analytics result.

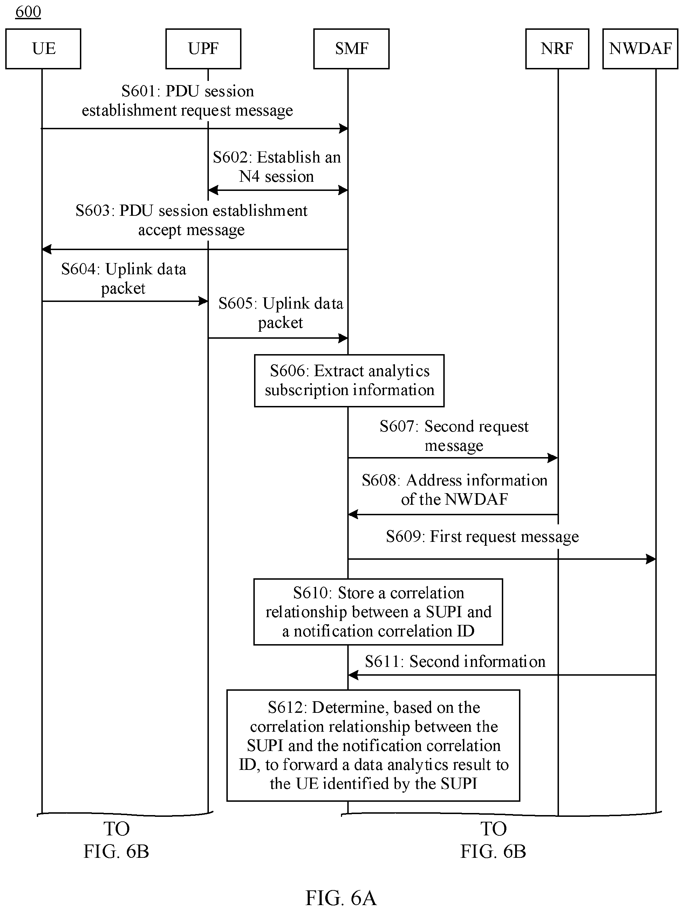

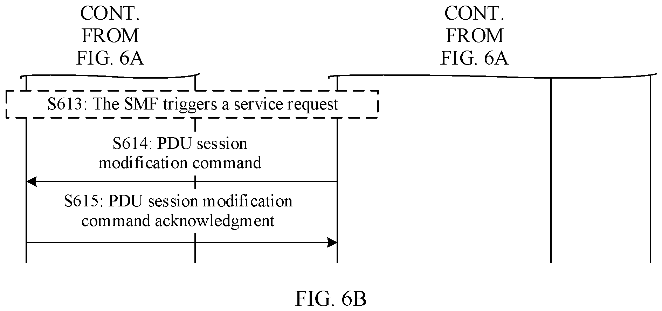

FIG. 6A and FIG. 6B are a schematic flowchart of a method for obtaining a data analytics result according to an embodiment of this application. In FIG. 6A and FIG. 6B, an example in which a first network element is a session management function network element (denoted as an SMF in the following) is used to describe a method in which a terminal device (denoted as UE in the following) obtains a data analytics result from a data analytics network element (denoted as NWDAF in the following) through the SMF. As shown in FIG. 6A and FIG. 6B, the method 600 includes S601 to S615. Each step is described in detail below.

S601 to S608 are the same as S501 to S508 in the method 500. For brevity, details are not described in this embodiment of this application again.

S609: The SMF sends a first request message to the NWDAF.

The first request message includes the analytics ID and a notification correlation ID, and the first request message is used to request the data analytics result corresponding to the data analytics type identified by the analytics ID.

For example, the first request message further includes the analytics filter information and/or the trigger condition for sending the data analytics result.

For example, the first request message further includes the SUPI.

For more descriptions of the first request message, refer to the description in S202a1.

S610: The SMF stores a correlation relationship between the SUPI and the notification correlation identifier.

S611: The NWDAF sends second information to the SMF.

The second information includes the data analytics result and the notification correlation ID.

For example, the second information further includes the analytics ID.

S612: The SMF determines, based on the correlation relationship between the SUPI and the notification correlation ID, to forward the data analytics result to the UE identified by the SUPI.

For example, if the UE is in an idle mode, the method 600 further includes S613. The SMF triggers a service request to page the UE.

S614: The SMF sends a PDU session modification command to the UE.

The PDU session modification command includes the data analytics result.

S615: The UE sends a PDU session modification command acknowledgment to the SMF.

The PDU session modification command acknowledgment indicates that the data analytics result is successfully received.

For example, in S615, if the UE does not successfully receive the data analytics result, the UE may send a PDU session modification command negative acknowledgment to the SMF, to indicate that the data analytics result is not successfully received.

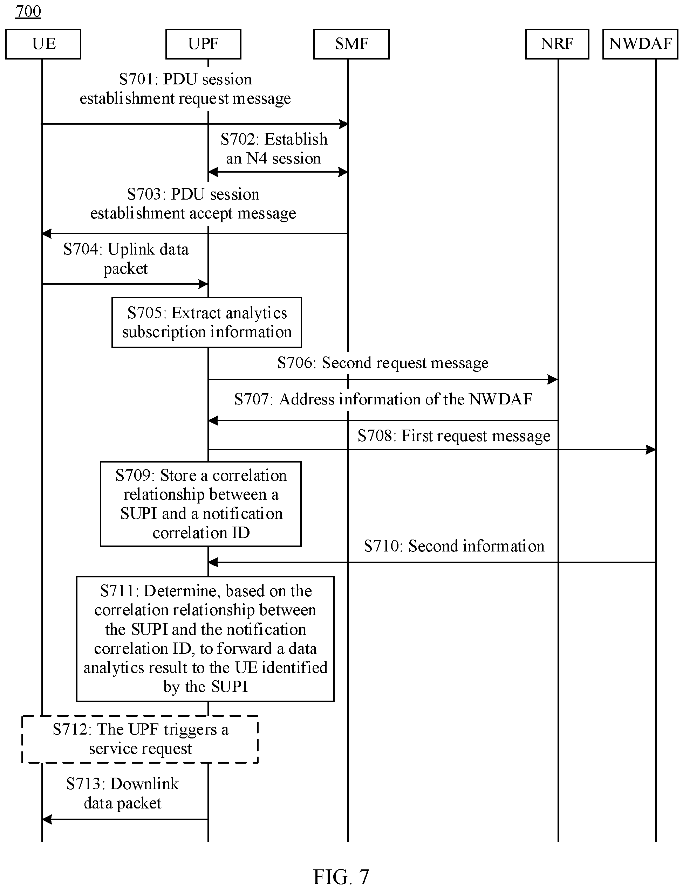

FIG. 7 is a schematic flowchart of a method for obtaining a data analytics result according to an embodiment of this application. In FIG. 7, an example in which a first network element is a user plane function network element (denoted as a UPF in the following) is used to describe a method in which a terminal device (denoted as UE in the following) obtains a data analytics result from a data analytics network element (denoted as NWDAF in the following) through the UPF. As shown in FIG. 7, the method 700 includes S701 to S713. Each step is described in detail below.

S701 to S704 are the same as S501 to S504 in the method 500. For brevity, details are not described in this embodiment of this application again.

S705: The UPF extracts analytics subscription information.

The UPF parses the uplink data packet and extracts the analytics subscription information from the uplink data packet. In other words, the UPF extracts an analytics ID, analytics filter information, and a trigger condition for sending the data analytics result that are included in the uplink data packet.

S706: The UPF sends a second request message to a network repository function network element (denoted as an NRF in the following).

For details, refer to the description in S202a3.

S707: The NRF sends address information of the NWDAF to the UPF.

S708: The UPF sends a first request message to the NWDAF.

The first request message includes the analytics ID and a notification correlation ID, and the first request message is used to request the data analytics result corresponding to a data analytics type identified by the analytics ID.

For example, the first request message further includes the analytics filter information and/or the trigger condition for sending the data analytics result.

For example, the first request message further includes a SUPI.

For more descriptions of the first request message, refer to the description in S202a1.

S709: The UPF stores a correlation relationship between the notification correlation ID and the SUPI.

The SUPI is used to identify the UE. The SUPI is obtained by the UPF from the SMF. In other words, the N4 session establishment request message sent by the SMF to the UPF includes the SUPI.

S710: The NWDAF sends second information to the UPF.

The second information includes the data analytics result and the notification correlation ID.

For example, the second information further includes the analytics ID.

S711: The UPF determines, based on the correlation relationship between the SUPI and the notification correlation ID, to forward the data analytics result to the UE identified by the SUPI.

For example, if the UE is in an idle mode, the method 700 further includes S712. The UPF triggers a service request to page the UE.

S713: The UPF sends a downlink data packet to the UE.

The downlink data packet includes the data analytics result.

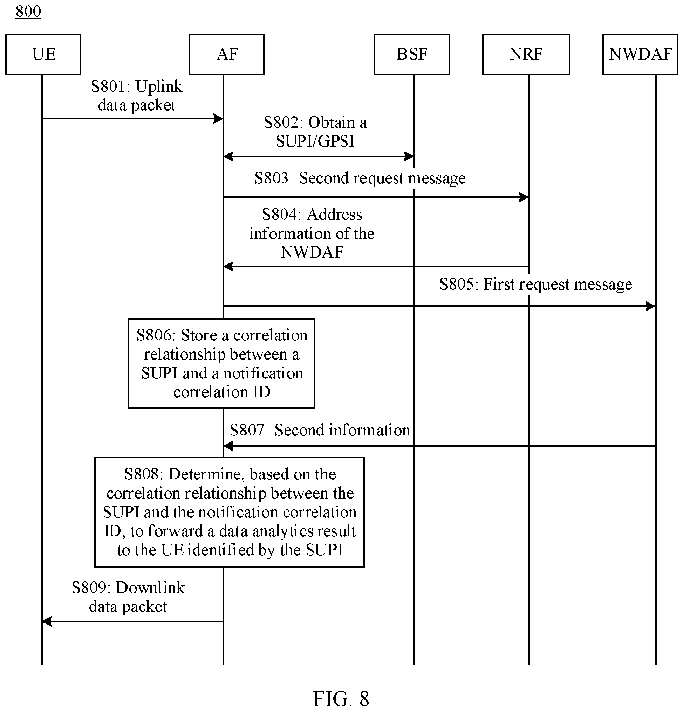

FIG. 8 is a schematic flowchart of a method for obtaining a data analytics result according to an embodiment of this application. In FIG. 8, an example in which a first network element is an application function network element (denoted as an AF in the following) is used to describe a method in which a terminal device (denoted as UE in the following) obtains a data analytics result from a data analytics network element (denoted as NWDAF in the following) through the AF. As shown in FIG. 8, the method 800 includes S801 to S809. Each step is described in detail below.

S801: The UE sends an uplink data packet to the AF.

The uplink data packet includes an analytics ID and an IP address of the UE. The analytics ID is used to identify a data analytics type requested by the UE. For a manner in which the UE obtains the analytics ID, refer to the description in S210.

For example, the uplink data packet further includes analytics filter information and/or a trigger condition for sending the data analytics result. For descriptions of the analytics filter information and the trigger condition for sending the data analytics result, refer to S210.

S802: The AF obtains a SUPI or a GPSI from a binding support function network element (denoted as a BSF in the following).

The SUPI or the GPSI is used to identify the UE.

Specifically, the AF requests, from the BSF by invoking a BSF service-based interface_management_discovery request operation (Nbsf__management_Discovery Request) service, the SUPI or the GPSI corresponding to the IP address of the UE.

Correspondingly, the BSF sends the SUPI or the GPSI to the AF by invoking a BSF service-based interface_management_discovery response operation (Nbsf__management_Discovery Response) service.

S803: The AF sends a second request message to a network repository function network element (denoted as an NRF in the following).

For details, refer to the description in S202a3.

S804: The NRF sends address information of the NWDAF to the AF.

S805: The AF sends a first request message to the NWDAF.

The first request message includes the analytics ID and a notification correlation ID, and the first request message is used to request the data analytics result corresponding to a data analytics type identified by the analytics ID.

For example, the first request message further includes the analytics filter information and/or the trigger condition for sending the data analytics result.

For example, the first request message further includes a SUPI.

For more descriptions of the first request message, refer to the description in S202a1.

S806: The AF stores a correlation relationship between the SUPI and the notification correlation identifier.

S807: The NWDAF sends second information to the AF.

The second information includes the data analytics result and the notification correlation ID.

For example, the second information further includes the analytics ID.

S808: The AF determines, based on the correlation relationship between the SUPI and the notification correlation ID, to forward the data analytics result to the UE identified by the SUPI.

S809: The AF sends a downlink data packet to the UE.

The downlink data packet includes the data analytics result.

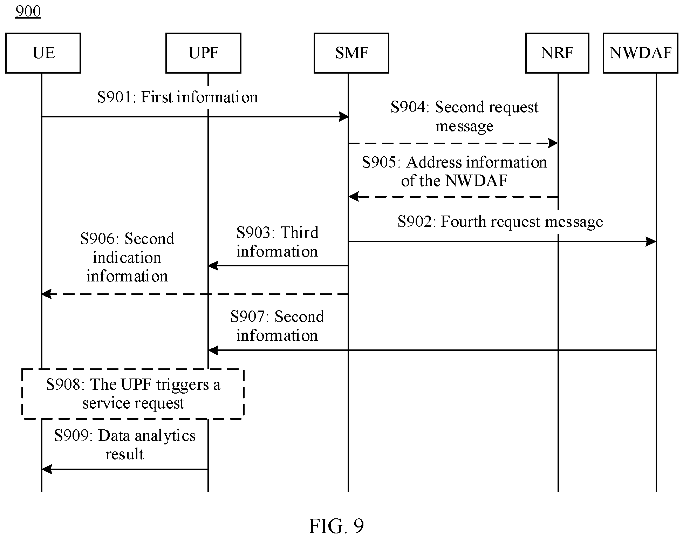

FIG. 9 is a schematic flowchart of a method for obtaining a data analytics result according to another embodiment of this application. As shown in FIG. 9, the method 900 may include S901 to S909. Each step is described in detail below.

S901: A session management network element (denoted as an SMF in the following) obtains first information.

For a description of the first information, refer to S210. For brevity, details are not described in this embodiment of this application again.

For example, in S901, that an SMF obtains first information includes: The SMF receives a session modification request message from a terminal device (denoted as UE in the following), where the session modification request message includes the first information. For example, the session modification request message is a PDU session modification request message.

For example, in S901, that an SMF obtains first information includes: The SMF receives a session establishment request message from the UE, where the session establishment request message includes the first information. For example, the session establishment request message is a PDU session establishment request message.

S902: The SMF sends a fourth request message to a data analytics network element (denoted as an NWDAF in the following). Correspondingly, in S902, the NWDAF receives the fourth request message from the SMF.

The fourth request message includes an analytics ID and address information of a UPF. The fourth request message is used to request the NWDAF to send a data analytics result corresponding to a data analytics type identified by the analytics ID to the UPF. The address information of the UPF is used to receive the data analytics result sent by the NWDAF.

For example, the fourth request message further includes a first identifier, and the first identifier corresponds to an identifier (for example, a SUPI) of the UE. For more descriptions of the identifier of the UE, refer to S202a1. The first identifier may be generated by the SMF. In other words, after receiving the first information from the UE, the SMF generates, based on the first information, the first identifier corresponding to the identifier of the UE.

For more descriptions of the fourth request message, refer to S202b2.

S903: The SMF sends third information to the UPF. Correspondingly, in S903, the UPF receives the third information from the SMF.

The third information includes address information of the NWDAF.

For example, if the fourth request message sent by the SMF includes the first identifier, the third information further includes the first identifier.

For example, in S903, the SMF sends an N4 session establishment request message to the UPF, where the N4 session establishment request message includes the address information of the NWDAF. For example, the N4 session establishment request message further includes the first identifier.

Correspondingly, the UPF stores a correlation relationship between the first identifier and the identifier of the UE.

For example, if the SMF does not obtain the address information of the NWDAF before S902, the method 900 further includes S904 and S905.

S904: The SMF sends a second request message to a network repository function network element (denoted as an NRF in the following). Correspondingly, in S905, the NRF receives the second request message from the SMF.

For a description of the second request message, refer to S202a3.

S905: The NRF sends address information of the data analytics network element to the SMF. Correspondingly, in S905, the SMF receives the address information of the NWDAF from the NRF.

Correspondingly, after receiving the address information of the NWDAF, the SMF sends the fourth request message to the NWDAF based on the address information of the NWDAF, and sends the third information to the UPF.

For example, after the SMF sends the fourth request message to the NWDAF, the method 900 further includes S906: The SMF sends second indication information to the UE, where the second indication information indicates the UE that the requested data analytics type has been subscribed to. For example, the second indication information may be named as a subscription completion indicator.

For example, in S906, the SMF sends a PDU session establishment/modification accept message to the UE, where the PDU session establishment/modification accept message includes the second indication information.

S907: The NWDAF sends second information to the UPF. Correspondingly, in S907, the UPF receives the second information from the NWDAF.

The NWDAF sends the second information to the UPF based on the address information of the UPF included in the fourth request message, where the second information includes the data analytics result and the address information of the NWDAF.

For example, if the fourth request message includes the first identifier, the second information further includes the first identifier.

For example, the second information further includes the analytics ID.

For example, in S907, the NWDAF sends a downlink data packet to the UPF, where the downlink data packet includes the data analytics result and the address information of the NWDAF. For example, the downlink data packet further includes the first identifier. An example in which the downlink data packet includes the address information of the NWDAF is that a source address of the downlink data packet is an address of the NWDAF.

Correspondingly, after the UPF receives the second information, if the address information of the NWDAF included in the second information is consistent with the address information of the NWDAF included in the third information, the UPF sends the data analytics result included in the second information to the UE. If the second information includes the first identifier, the UPF determines, based on the correlation relationship between the identifier of the UE and the first identifier, to send the data analytics result to the UE.

For example, if the UE is in an idle mode, the method 900 further includes S908. The UPF triggers a service request to page the UE.

S909: The UPF sends the data analytics result to the UE. Correspondingly, in S909, the UE receives the data analytics result from the UPF.

For example, in S909, the UPF sends a downlink data packet to the UE, where the downlink data packet includes the data analytics result.

In this embodiment of this application, the terminal device sends the first information to the session management network element, where the first information includes the analytics ID used to identify the data analytics type requested by the terminal device, so that the session management network element may request, based on the first information, the data analytics network element to send the data analytics result to the user plane function network element. Then, the user plane function network element may send the data analytics result to the terminal device. After obtaining the data analytics result, the terminal device may make a quicker response based on the data analytics result, to assist in improving performance of the terminal device.

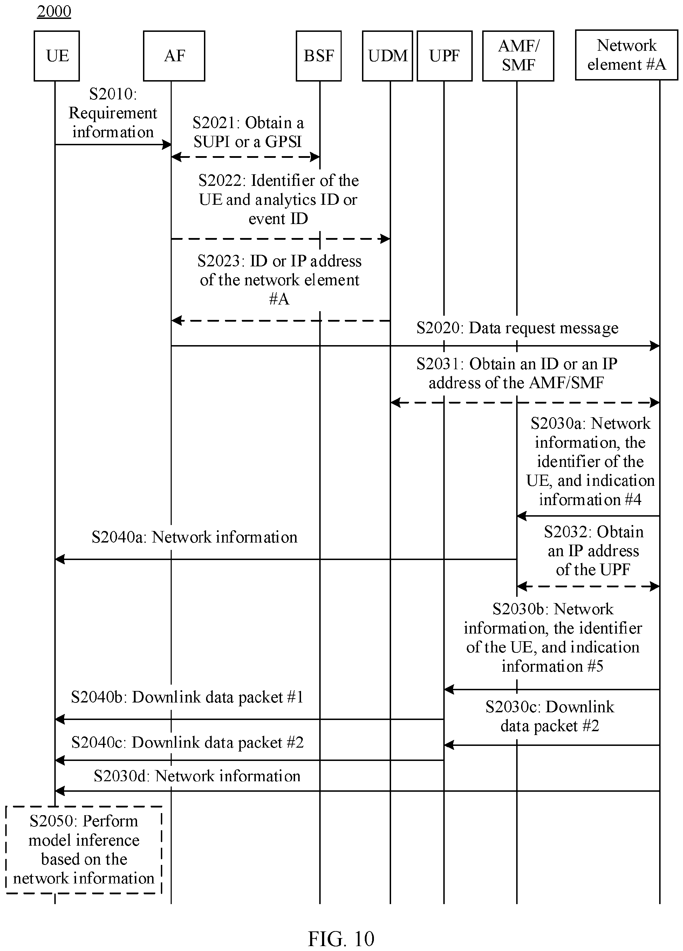

FIG. 10 is a schematic flowchart of a method for obtaining network information according to an embodiment of this application. Compared with those in the methods in FIG. 2 to FIG. 9, in the method described in FIG. 10, an application function network element (denoted as an AF in the following) requests, from a network element #A based on a requirement of a terminal device (denoted as UE in the following), network information required by the UE, and indicates the network element #A to send the network information to the UE. The following describes in detail steps included in the method 2000.

S2010: The UE sends requirement information to the AF. Correspondingly, the AF receives the requirement information from the UE.

The requirement information indicates a network information type required by the UE. For example, the requirement information indicates a data analytics type required by the UE. The network information type required by the UE is a network information type that a network allows to provide for the UE.

For example, the requirement information includes an analytics ID, and the analytics ID is used to identify the data analytics type required by the UE. For example, an analytics ID used to identify service experience data analytics may be "service experience (Service Experience)". For another example, an analytics ID used to identify load data analytics may be "NF load information (NF load information)". For another example, an analytics ID used to identify QoS sustainability analytics may be "QoS sustainability (QoS Sustainability)". For a manner in which the UE obtains the analytics ID, refer to the description in S201. For brevity, details are not described herein again.

For another example, the requirement information includes an event ID, and the event ID is used to identify a network information type other than the data analytics type. For example, the event ID is used to identify a network information type corresponding to network information provided by a session management network element (denoted as an SMF in the following), an access and mobility management function network element (denoted as an AMF in the following), or a user plane function network element (denoted as a UPF in the following). For example, an event ID used to identify a network information type corresponding to PDU session status information provided by the SMF may be "PDU session status (PDU Session Status)". For another example, an event ID used to identify a network information type corresponding to location reporting information provided by the AMF may be "location reporting (Location Reporting)".

For another example, the requirement information includes correlation information of the network information type, and the correlation information is used to determine the network information type. For example, the correlation information is information that is used to determine the network information type and that is determined by the UE and the AF through negotiation. For example, the AF sends a mapping relationship #1 to the UE, where the mapping relationship #1 includes correspondences between different network information types and correlation information of the network information types, and the mapping relationship #1 is shown in Table 1. When the network information type is the data analytics type, the correlation information of the network information type may also be referred to as correlation information of the data analytics type.

**Table 1**

| Network information type | Correlation information |
|---|---|
| Service experience data analytics | Correlation information #1 |
| Load data analytics | Correlation information #2 |
| Location reporting information | Correlation information #3 |

For another example, the requirement information is a request message corresponding to the network information type. For example, if the requirement information sent by the UE to the AF is a request message #1 used to request to download a V2X-related AI model, the AF may determine, based on the request message #1, that the network information type required by the UE is quality of service sustainability (QoS Sustainability) information. For another example, if the requirement information sent by the UE to the AF is a request message #2 used to request to download an AI model for predicting a movement track, the AF may determine, based on the request message #2, that the network information type required by the UE is location reporting information.

S2020: The AF sends a data request message to the network element #A. Correspondingly, the network element #A receives the data request message from the AF.

After determining, based on the requirement information received from the UE, the network information type required by the UE, the AF sends the data request message to the network element #A that can provide the UE with network information corresponding to the network information type. The data request message is used to request, from the network element #A, the network information corresponding to the network information type required by the UE.

For example, if the network information type required by the UE is the data analytics type, for example, the service experience data analytics or network element load data analytics, the AF sends the data request message to a data analytics network element (that is, the network element #A is the data analytics network element, and the data analytics network element is denoted as NWDAF in the following) that is configured to provide the UE with a data analytics result corresponding to the data analytics type. The data request message is used to request, from the NWDAF, the data analytics result corresponding to the data analytics type required by the UE, and the data request message includes the analytics ID, an identifier of the UE, and indication information #1.

The analytics ID is used to identify the data analytics type required by the UE. For example, if the requirement information sent by the UE to the AF includes the analytics ID, the AF directly carries the analytics ID included in the requirement information in a data analytics request message. For another example, if the requirement information sent by the UE to the AF does not include the analytics ID, the AF determines, based on the requirement information, the data analytics type required by the UE, then determines the analytics ID used to identify the data analytics type required by the UE, and carries the analytics ID in a data analytics request message. For example, if the requirement information includes the correlation information of the data analytics type, the AF determines the data analytics type based on the correlation information, and then determines the analytics ID used to identify the data analytics type.

The identifier of the UE includes one or more of the following: a SUPI, a GPSI, and an IP address.

The indication information #1 indicates the data analytics network element to send the data analytics result to the UE. For example, the indication information #1 includes a notification identifier, and the notification identifier indicates the data analytics network element to send the data analytics result to the UE. For example, the notification identifier is 1-bit information. When a value of the notification identifier is a preset value (for example, the preset value is 1), the notification identifier indicates the data analytics network element to send the data analytics result to the UE. For another example, the indication information #1 is a key-value (key-value) pair, and the key is a character string, for example, key="data sending target". When the value is the identifier (for example, the SUPI, the GPSI, or the IP address) of the UE, the indication information #1 indicates the data analytics network element to send the data analytics result to the UE.

For another example, if the network information type required by the UE is not the data analytics type, the AF sends the data request message to the network element #A that is configured to provide the UE with the network information corresponding to the network information type. The data request message includes the event ID, the identifier of the UE, and the indication information #1. For example, if the network information type required by the UE is location reporting information, the AF sends the data request message to the AMF (that is, the network element #A is the AMF) that is configured to provide the location reporting information for the UE. For another example, if the network information type required by the UE is PDU session status information, the AF sends the data request message to the SMF (that is, the network element #A is the SMF) that is configured to provide the PDU session status information for the UE.

The event ID is used to identify the network information type other than the data analytics type. For example, if the requirement information sent by the UE to the AF includes the event ID, the AF directly carries the event ID included in the requirement information in the data request message. For another example, if the requirement information sent by the UE to the AF does not include the event ID, the AF determines, based on the requirement information, the network information type required by the UE, then determines the event ID used to identify the network information type required by the UE, and carries the event ID in the data request message. For example, if the requirement information includes correlation information of the location reporting information, the AF determines, based on the correlation information, that the UE requires the location reporting information, and then determines the event ID used to identify the location reporting information.

For example, if the identifier of the UE includes the SUPI or the GPSI, and the AF does not obtain the SUPI and the GPSI of the UE, before the AF sends the data request message to the network element #A, the method 2000 further includes S2021.

S2021: The AF obtains the SUPI or the GPSI.

For a description of S2021, refer to S802 in FIG. 8. For brevity, details are not described herein again.

For example, if the AF does not obtain address information of the network element #A, before the AF sends the data request message to the network element #A, the method 2000 further includes S2022 and S2023.

S2022: The AF sends the identifier of the UE and the analytics ID or the event ID to a unified data management network element (denoted as a UDM in the following). Correspondingly, the UDM receives the identifier of the UE and the analytics ID or the event ID from the AF.

The identifier of the UE includes the SUPI or the GPSI.

If the AF determines the analytics ID based on the requirement information received from the UE, the AF sends the identifier of the UE and the analytics ID to the UDM. If the AF determines the event ID based on the requirement information received from the UE, the AF sends the identifier of the UE and the event ID to the UDM.

S2023: The AF receives an identifier (ID) or an IP address of the network element #A from the UDM. Correspondingly, the UDM sends the ID or the IP address of the network element #A to the AF.

After the UDM receives the identifier of the UE and the analytics ID that are from the AF, the UDM determines, based on the identifier of the UE and the analytics ID, an ID or an IP address of the NWDAF that can provide the data analytics result corresponding to the data analytics type identified by the analytics ID and that can provide a service for the UE, or determines an ID or an IP address of the NWDAF corresponding to the identifier of the UE and the analytics ID.

After the UDM receives the identifier of the UE and the event ID that are from the AF, the UDM determines, based on the identifier of the UE and the event ID, the ID or the IP address of the network element #A that can provide the network information corresponding to the network information type identified by the event ID and that can provide a service for the UE, or determines the ID or the IP address of the network element #A corresponding to the identifier of the UE and the event ID. For example, if the UDM receives the identifier of the UE and the "PDU session status" that are from the AF, the UDM determines an ID or an IP address of the SMF that provides the PDU session status information for the UE. For another example, if the UDM receives the identifier of the UE and the "location reporting" from the AF, the UDM determines an ID or an IP address of the AMF that provides the location reporting information for the UE.

For example, the AF sends the request message #1 to the UDM by invoking a UDM service-based interface_UE connection management (connection management, CM)_get_request (Nudm_UECM_Get Request) service operation. The request message #1 includes the identifier of the UE and the analytics identity, or the request message #1 includes the identifier of the UE and the event identifier. Correspondingly, the UDM sends the ID or the IP address of the network element #A to the AF by invoking a UDM service-based interface_UE connection management (connection management, CM)_get_response (Nudm_UECM_Get Response) service operation.

After obtaining the SUPI or the GPSI of the UE, and the ID or the IP address of the network element #A, the AF sends the data request message to the network element #A.

For example, if the requirement information received by the AF from the UE includes the correlation information of the network information type, the data request message sent by the AF to the network element #A further includes the correlation information.

For example, the data request message further includes filter information and/or a trigger condition for sending the network information. The filter information is used to determine a range of the network information, and the trigger condition for sending the network information includes: a periodicity, a quantity of times, a time period, or the like for sending the network information, and/or an event for sending the network information. For example, if the data request message is used to request the data analytics result corresponding to the data analytics type required by the UE, the data request message further includes analytics filter information and/or a trigger condition for sending the data analytics result. For descriptions of the analytics filter information and/or the trigger condition for sending the data analytics result, refer to S201 in FIG. 2.

For example, the data request message further includes indication information #2, and the indication information #2 indicates the network element #A to send the network information to the UE in a user plane manner or a control plane manner. For example, the indication information #2 is 1-bit information. When a value of the indication information #2 is "0", the indication information #2 indicates to send the network information to the UE in the user plane manner. When a value of the indication information #2 is "1", the indication information #2 indicates to send the network information to the UE in the control plane manner.

For example, the indication information #1 and the indication information #2 included in the data request message may be a same piece of indication information. In other words, a piece of indication information (denoted as indication information #3) included in the data request message indicates the network element #A to send the network information to the UE, and also indicates the network element #A to send the network information to the UE in the control plane manner or the user plane manner. For example, the indication information #3 included in the data request message is 2-bit information. When a value of a first bit of the indication information #3 is "1", the indication information #3 indicates the network element #A to send the network information to the UE, and when a value of a second bit of the indication information #3 is "0", the indication information #3 indicates to send the network information to the UE in the user plane manner, or when a value of the second bit of the indication information #3 is "1", the indication information #3 indicates to send the network information to the UE in the control plane manner. For another example, the indication information #3 is a key-value (key-value) pair, the key is a character string, for example, key="data sending target and sending manner", and the value is a structure array. When a value of a first number in the structure array is the identifier (for example, the SUPI, the GPSI, or the IP address) of the UE, the indication information #3 indicates the network element #A to send the network information to the UE, and when a value of a second number in the structure array is "0", the indication information #3 indicates to send the network information to the UE in the user plane manner, or when a value of the second number in the structure array is "1", the indication information #3 indicates to send the network information to the UE in the control plane manner.

For example, if the requirement information received by the AF from the UE does not include the analytics ID or the event ID, after the AF determines the analytics ID or the event ID based on the requirement information, the method 2000 further includes: The AF sends the analytics ID or the event ID to the UE. The analytics ID is used by the UE to determine a data analytics type of the received data analytics result, and the event ID is used by the UE to determine a network information type of the received network information.

For example, if the AF is a third-party application function network element, the AF sends the data request message to the network element #A through the NEF. In other words, the AF sends the data request message to the NEF, and the NEF forwards the data request message to the network element #A. After the NEF receives the data request message from the AF, the NEF determines, based on a stored mapping relationship #2 or a stored mapping relationship #3 and an inbound restriction, whether to forward the data request message to the network element #A. The mapping relationship #2 includes a correspondence between an identifier of the AF and an analytics ID that is allowed to be obtained by the AF, the mapping relationship #3 includes a correspondence between the identifier of the AF and an event ID that is allowed to be obtained by the AF, and the inbound restriction includes an analytics ID and an event ID that are allowed to be requested by the AF. For example, if the analytics ID included in the data request message is included in both the mapping relationship #2 and the inbound restriction, the NEF forwards the data request message to the network element #A.

After the network element #A receives the data request message from the AF, if the data request message includes the analytics ID, the network element #A obtains the data analytics result corresponding to the data analytics type identified by the analytics ID included in the data request message, and determines, based on the identifier of the UE and the indication information #1 (or the indication information #3) that are included in the data request message, to send the data analytics result to the UE.

For example, if the analytics ID included in the data request message is "QoS Sustainability", the network element #A collects RAN UE throughput (throughput) and QoS flow (flow) retainability (retainability) information from an OAM, and performs statistics and/or analytics on the RAN UE throughput and QoS flow retainability information to obtain a QoS Sustainability analytics result. For example, the QoS Sustainability analytics result may further include information about an area to which the analytics result is applicable, a time period to which the analytics result is applicable, and whether a throughput of the UE or a QoS flow retainability exceeds or falls below a threshold.

A manner in which the network element #A sends the network information to the UE is not limited in embodiments of this application.

For example, when the identifier of the UE included in the data request message includes the SUPI or the GPSI of the UE, or when the data request message includes indication information (namely, the foregoing indication information #2 or the foregoing indication information #3) indicating to send the network information to the UE in the control plane manner, the network element #A may send the network information to the UE in the control plane manner. Certainly, in the foregoing cases, the network element #A may alternatively send the network information to the UE in the user plane manner.

For another example, when the network element #A establishes a session connection to the UE, or when the identifier of the UE included in the data request message includes the IP address of the UE, or when the data request message includes indication information (namely, the foregoing indication information #2 or the foregoing indication information #3) indicating to send the network information to the UE in the user plane manner, the network element #A may send the network information to the UE in the user plane manner. Certainly, in the foregoing cases, the network element #A may alternatively send the network information to the UE in the control plane manner.

If the network element #A sends the network information to the UE in the control plane manner, S2030a and S2040a in the method 2000 are performed, or S2030d in the method 2000 is performed. For example, if the network element #A is a network element other than the AMF and the SMF, for example, the network element #A is the NWDAF, S2030a and S2040a in the method 2000 are performed. If the network element #A is the AMF or the SMF, S2030d in the method 2000 is performed. It should be noted that, if the network element #A is the UPF, the network element #A does not send the network information to the UE in the control plane manner.

If the network element #A sends the network information to the UE in the user plane manner, S2030b and S2040b in the method 2000 are performed, or S2030c and S2040c in the method 2000 are performed, or S2030d in the method 2000 is performed. For example, if the network element #A is a network element other than the UPF, for example, the network element #A is the NWDAF, S2030b and S2040b in the method 2000 are performed, or S2030c and S2040c in the method 2000 are performed. If the network element #A is the UPF, S2030d in the method 2000 is performed. It should be noted that, if the network element #A is the AMF, the network element #A does not send the network information to the UE in the user plane manner.

S2030a: The network element #A sends the network information, the identifier of the UE, and indication information #4 to the AMF/SMF.

The identifier of the UE includes the SUPI or the GPSI.

The indication information #4 indicates the AMF/SMF to send the network information to the UE. A form of the indication information #4 is the same as a form of the foregoing indication information #1. For brevity, details are not described herein again.

It should be understood that, in S2030a, the network element #A sends the network information, the identifier of the UE, and the indication information #4 to the AMF/SMF providing a service for the UE.

For example, if the network element #A is the NWDAF, the network element #A may send a notification message to the SMF/SMF by invoking an Nnwdaf_AnalyticsSubscription_Notify service operation. The notification message includes the network information, the identifier of the UE, and the indication information #4.

For example, that the network element #A sends the network information, the identifier of the UE, and the indication information #4 to the AMF/SMF includes: The network element #A sends the network information, the identifier of the UE, the indication information #4, and the analytics ID to the AMF/SMF.

For example, that the network element #A sends the network information, the identifier of the UE, and the indication information #4 to the AMF/SMF includes: The network element #A sends the network information, the identifier of the UE, the indication information #4, and the event ID to the AMF/SMF.

For example, if the data request message received by the network element #A includes the correlation information of the network information type, that the network element #A sends the network information, the identifier of the UE, and the indication information #4 to the AMF/SMF includes: The network element #A sends the network information, the identifier of the UE, the indication information #4, and the correlation information to the AMF/SMF.

For example, if the network element #A does not obtain an ID or an IP address of the AMF/SMF providing a service for the UE, before S2030a, the method 2000 further includes S2031.

S2031: The network element #A obtains the ID or the IP address of the AMF/SMF.

For example, the network element #A sends the request message #2 to the UDM by invoking the Nudm_UECM_Get Request service operation, where the request message #2 includes the SUPI or the GPSI of the UE. Correspondingly, the UDM queries, based on the SUPI or the GPSI of the UE, the ID or the IP address of the AMF providing a service for the UE, and sends the ID or the IP address of the AMF to the network element #A by invoking the Nudm_UECM_Get Response service operation.

For example, the network element #A sends the request message #3 to the UDM by invoking the UDM service-based interface_service data management (service data management, SDM)_get request (Nudm_SDM_Get Request) service operation, where the request message #3 includes the SUPI or the GPSI of the UE. Correspondingly, the UDM queries, based on the SUPI or the GPSI of the UE, the ID or the IP address of the SMF providing a service for the UE, and sends the ID or the IP address of the SMF to the network element #A by invoking the UDM service-based interface_SDM_Get Response (Nudm_UECM_Get Response) service operation.

S2040a: The AMF/SMF sends the network information to the UE.

After receiving the network information, the identifier of the UE, and the indication information #4 from the network element #A, the AMF/SMF determines, based on the indication information #4, to send the network information to the UE corresponding to the identifier of the UE.

For example, that the AMF sends the network information to the UE includes: The AMF sends a UE configuration update command (UE configuration update command) to the UE, where the UE configuration update command includes the network information.

For example, that the SMF sends the network information to the UE includes: The SMF sends a PDU session modification command to the UE, where the PDU session modification command includes the network information.

For example, if the AMF/SMF receives the network information, the identifier of the UE, the indication information #4, and the analytics ID from the network element #A, the AMF/SMF sends the network information and the analytics ID to the UE.

Alternatively, if the AMF/SMF receives the network information, the identifier of the UE, the indication information #4, and the event ID from the network element #A, the AMF/SMF sends the network information and the event ID to the UE.

Alternatively, if the AMF/SMF receives the network information, the identifier of the UE, the indication information #4, and the correlation information from the network element #A, the AMF/SMF sends the network information and the correlation information to the UE.

For example, if the UE is in an idle (IDLE) mode after the AMF/SMF receives the network information from the network element #A, the AMF/SMF triggers a service request (service request) to page the UE. After paging the UE, the AMF/SMF sends the network information to the UE.

S2030b: The network element #A sends the network information, the identifier of the UE, and indication information #5 to the UPF.

The identifier of the UE includes the SUPI or the GPSI. Alternatively, the identifier of the UE includes the IP address. Alternatively, the identifier of the UE includes the SUPI or the GPSI and the IP address.

The indication information #5 indicates the UPF to send the network information to the UE. A form of the indication information #5 is the same as a form of the foregoing indication information #1. For brevity, details are not described herein again.

It should be understood that, in S2030b, the network element #A sends the network information, the identifier of the UE, and the indication information #5 to the UPF providing a service for the UE.

For example, if the network element #A is the NWDAF, the network element #A may send a notification message to the UPF by invoking the Nnwdaf_AnalyticsSubscription_Notify service operation. The notification message includes the network information, the identifier of the UE, and the indication information #5.

For example, that the network element #A sends the network information, the identifier of the UE, and the indication information #5 to the UPF includes: The network element #A sends the network information, the identifier of the UE, the indication information #5, and the analytics ID to the AMF/SMF.

For example, that the network element #A sends the network information, the identifier of the UE, and the indication information #5 to the UPF includes: The network element #A sends the network information, the identifier of the UE, the indication information #5, and the event ID to the AMF/SMF.

For example, if the data request message received by the network element #A includes the correlation information of the network information type, that the network element #A sends the network information, the identifier of the UE, and the indication information #5 to the UPF includes: The network element #A sends the network information, the identifier of the UE, the indication information #5, and the correlation information to the UPF.

For example, if the network element #A does not obtain the IP address of the UPF providing a service for the UE, before S2030b, the method 2000 further includes S2031 and S2032.

S2031: The network element #A obtains the ID or the IP address of the SMF.

For a description of S2031, refer to the foregoing description.

S2032: The network element #A obtains the IP address of the UPF.

After obtaining the ID or the IP address of the SMF providing a service for the UE, the network element #A obtains, from the SMF based on the ID or the IP address of the SMF, the IP address of the UPF providing a service for the UE.

For example, the network element #A sends the request message #4 to the SMF by invoking an SMF service-based interface_event exposure_subscribe (Nsmf_EventExposure_Subscribe) service operation, where the request message #4 includes the SUPI or the GPSI of the UE. Correspondingly, the SMF discovers, based on the SUPI or the GPSI of the UE, the IP address of the UPF providing a service for the UE, and sends the IP address of the UPF to the network element #A by invoking an SMF service-based interface_event exposure_notify (Nsmf_EventExposure_Notify) service operation.

S2040b: The UPF sends the network information to the UE.

After receiving the network information, the identifier of the UE, and the indication information #5 from the network element #A, the UPF determines, based on the indication information #5, to send the network information to the UE corresponding to the identifier of the UE.

For example, that the UPF sends the network information to the UE includes: The UPF sends a downlink data packet #1 to the UE, where the downlink data packet #1 includes the network information.

It should be understood that when the UPF sends the downlink data packet #1 to the UE, the UPF sends the downlink data packet #1 to the UE based on the IP address of the UE. If the identifier of the UE that is received by the UPF from the network element #A includes the IP address, the UPF sends the downlink data packet #1 to the UE based on the IP address. If the identifier of the UE that is received by the UPF from the network element #A includes the SUPI or the GPSI, the UPF determines the IP address of the UE based on the SUPI or the GPSI of the UE.

For example, if the UPF receives the network information, the identifier of the UE, the indication information #5, and the analytics ID from the network element #A, the UPF sends the network information and the analytics ID to the UE.

Alternatively, if the UPF receives the network information, the identifier of the UE, the indication information #5, and the event ID from the network element #A, the UPF sends the network information and the event ID to the UE.

Alternatively, if the UPF receives the network information, the identifier of the UE, the indication information #5, and the correlation information from the network element #A, the UPF sends the network information and the correlation information to the UE.

For example, if the UE is in an idle mode after the UPF receives the network information from the network element #A, the SMF triggers a service request to page the UE. After the SMF pages the UE, the UPF sends the network information to the UE.

S2030c: The network element #A sends a downlink data packet #2 to the UPF.

The downlink data packet #2 includes the network information. For example, the downlink data packet #2 further includes the analytics identity, the event identifier, or the correlation information.

It should be understood that if the network element #A (for example, the NWDAF) has established a PDU session connection to the UE, the network element #A may send the downlink data packet #2 through the PDU session. When the network element #A sends the downlink data packet #2 to the UE, the network element #A sends the downlink data packet #2 to the UE based on the IP address of the UE. If the identifier of the UE that is received by the network element #A from the AF includes the IP address, the network element #A sends the downlink data packet #2 to the UE based on the IP address. If the identifier of the UE that is received by the network element #A from the AF includes the SUPI or the GPSI, the network element #A determines the IP address of the UE based on the SUPI or the GPSI of the UE.

S2040c: The UPF sends the downlink data packet #2 to the UE.

After receiving the downlink data packet #2, the UPF forwards the downlink data packet #2 to the UE.

S2030d: The network element #A sends the network information to the UE.

For example, if the network element #A is the AMF, the network element #A may send the network information to the UE through the UE configuration update command. If the network element #A is the SMF, the network element #A may send the network information to the UE through the PDU session modification command. If the network element #A is the UPF, the network element #A may send the network information to the UE through the downlink data packet #1.

For example, that the network element #A sends the network information to the UE includes: The network element #A sends the network information and the analytics ID to the UE.

For example, that the network element #A sends the network information to the UE includes: The network element #A sends the network information and the event ID to the UE.

For example, if the data request message received by the network element #A includes the correlation information of the network information type, that the network element #A sends the network information to the UE includes: The network element #A sends the network information and the correlation information to the UE.

For example, the method 2000 further includes S2050.

S2050: The UE performs model inference based on the network information.

As described above, the UE may download the AImodel from the AF. In this case, after receiving the network information, the UE may perform AI model inference based on the network information.

It may be understood that, if the UE requires only one network information type, after receiving the network information, the UE may determine that the received network information is the network information corresponding to the network information type required by the UE. If the UE requires a plurality of network information types, the UE determines, based on the received network information and the analytics ID or the event ID or the correlation information, which network information type required by the UE corresponds to the received network information. For example, if the UE receives the network information and the analytics ID="Service Experience", the UE determines that the received network information corresponds to service experience data analytics, that is, the network information is a service experience data analytics result. For another example, if the UE receives the network information and the event ID="Location Reporting", the UE determines that the received network information corresponds to the location reporting information.

In this embodiment of this application, the terminal device (that is, the foregoing UE) sends the requirement information to the application function network element (that is, the foregoing AF), where the requirement information indicates the network information type required by the terminal device, so that the application function network element may request, based on the requirement information, the network information from the network element #A that can provide the terminal device with the network information corresponding to the network information type, and indicate the network element #A to send the network information to the terminal device. After obtaining the network information, the terminal device may make a quicker response based on the network information, to assist in improving performance of the terminal device.

In addition, in this embodiment of this application, the application function network element requests the network information from the network element #A based on a requirement of the terminal device, and the UE does not request the network information from the network element #A. This avoids a security problem that may be caused by the UE requesting the network information. For example, for a pseudo UE or a UE that is incorrectly used or maliciously hijacked to attack a network, even if the application function network element receives requirement information of such UE, the application function network element does not request the network information from the network element #A for such UE. This can avoid security problems such as network information leakage and network congestion caused by obtaining the network information by such UE.

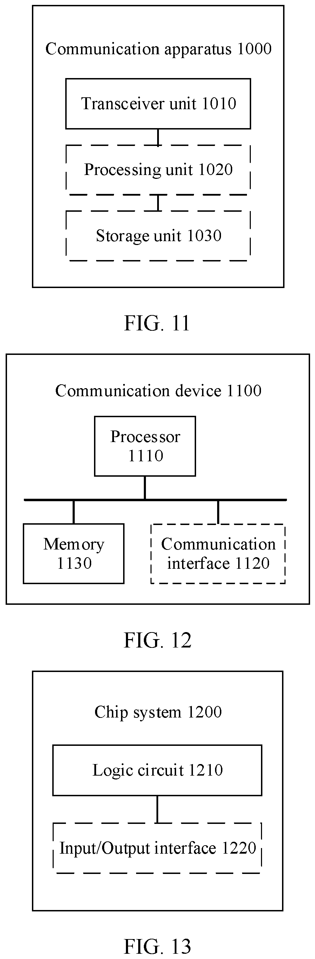

The method provided in embodiments of this application is described above in detail with reference to FIG. 2 to FIG. 10. A communication apparatus provided in embodiments of this application is described below in detail with reference to FIG. 11 to FIG. 13. It should be understood that descriptions of apparatus embodiments correspond to the descriptions of the method embodiments. Therefore, for content that is not described in detail, refer to the method embodiments. For brevity, details are not described herein again.

FIG. 11 is a schematic block diagram of a communication apparatus 1000 according to an embodiment of this application. As shown in the figure, the communication apparatus 1000 may include a transceiver unit 1010.

In a possible design, the communication apparatus 1000 may be the first network element in the foregoing method embodiments, or may be a chip configured to implement the function of the first network element in the foregoing method embodiments.

It should be understood that the communication apparatus 1000 may correspond to the first network element in the method 200, the AMF in the method 300, the SMF in the method 400 or the method 600, the UPF in the method 500 or the method 700, or the AF in the method 800 according to embodiments of this application. The communication apparatus 1000 may include a unit configured to perform the method performed by the first network element in the method 200 in FIG. 2, a unit configured to perform the method performed by the AMF in the method 300 in FIG. 3, a unit configured to perform the method performed by the SMF in the method 400 in FIG. 4 or the method 600 in FIG. 6A and FIG. 6B, a unit configured to perform the method performed by the UPF in the method 500 in FIG. 5 or the method 700 in FIG. 7, or a unit configured to perform the method performed by the AF in the method 800 in FIG. 8. In addition, the units in the communication apparatus 1000 and the foregoing other operations and/or functions are separately intended to implement corresponding procedures of the method 200 in FIG. 2 to the method 800 in FIG. 8. It should be understood that a specific process in which the units perform the foregoing corresponding steps is described in detail in the foregoing method embodiments. For brevity, details are not described herein.

In another possible design, the communication apparatus 1000 may be the terminal device in the foregoing method embodiments, or may be a chip configured to implement a function of the terminal device in the foregoing method embodiments.

It should be understood that the communication apparatus 1000 may correspond to the terminal device in the method 200 to the method 900 according to embodiments of this application, and the communication apparatus 1000 may include a unit configured to perform the method performed by the terminal device in the method in FIG. 2 to the method 900 in FIG. 9. In addition, the units in the communication apparatus 1000 and the foregoing other operations and/or functions are separately intended to implement corresponding procedures of the method in FIG. 2 to the method 900 in FIG. 9. It should be understood that a specific process in which the units perform the foregoing corresponding steps is described in detail in the foregoing method embodiments. For brevity, details are not described herein.

In another possible design, the communication apparatus 1000 may be the session management network element in the foregoing method embodiments, or may be a chip configured to implement a function of the session management network element in the foregoing method embodiments.

It should be understood that, the communication apparatus 1000 may correspond to the session management network element in the method 900 according to embodiments of this application, and the communication apparatus 1000 may include a unit configured to perform the method performed by the session management network element in the method 900 in FIG. 9. In addition, the units in the communication apparatus 1000 and the foregoing other operations and/or functions are separately used to implement a corresponding procedure of the method 900 in FIG. 9. It should be understood that a specific process in which the units perform the foregoing corresponding steps is described in detail in the foregoing method embodiments. For brevity, details are not described herein.

In another possible design, the communication apparatus 1000 may be the data analytics network element in the foregoing method embodiments, or may be a chip configured to implement the function of the data analytics network element in the foregoing method embodiments.

It should be understood that the communication apparatus 1000 may correspond to the data analytics network element in the method 200 to the method 900 according to embodiments of this application, and the communication apparatus 1000 may include a unit configured to perform the method performed by the data analytics network element in the method 200 in FIG. 2 to the method 900 in FIG. 9. In addition, the units in the communication apparatus 1000 and the foregoing other operations and/or functions are separately intended to implement corresponding procedures of the method 200 in FIG. 2 to the method 900 in FIG. 9. It should be understood that a specific process in which the units perform the foregoing corresponding steps is described in detail in the foregoing method embodiments. For brevity, details are not described herein.

In another possible design, the communication apparatus 1000 may be the user plane function network element in the foregoing method embodiments, or may be a chip configured to implement the function of the user plane function network element in the foregoing method embodiments.

It should be understood that the communication apparatus 1000 may correspond to the user plane function network element in the method 900 according to embodiments of this application, and the communication apparatus 1000 may include a unit configured to perform the method performed by the user plane function network element in the method 900 in FIG. 9. In addition, the units in the communication apparatus 1000 and the foregoing other operations and/or functions are separately used to implement a corresponding procedure of the method 900 in FIG. 9. It should be understood that a specific process in which the units perform the foregoing corresponding steps is described in detail in the foregoing method embodiments. For brevity, details are not described herein.

In another possible design, the communication apparatus 1000 may be the application function network element in the foregoing method embodiments, or may be a chip configured to implement the function of the application function network element in the foregoing method embodiments.

It should be understood that the communication apparatus 1000 may correspond to the application function network element in the method 2000 according to embodiments of this application, and the communication apparatus 1000 may include a unit configured to perform the method performed by the application function network element in the method 2000 in FIG. 10. In addition, the units in the communication apparatus 1000 and the foregoing other operations and/or functions are separately used to implement a corresponding procedure of the method 2000 in FIG. 10. It should be understood that a specific process in which the units perform the foregoing corresponding steps is described in detail in the foregoing method embodiments. For brevity, details are not described herein.

In another possible design, the communication apparatus 1000 may be the terminal device in the foregoing method embodiments, or may be a chip configured to implement a function of the terminal device in the foregoing method embodiments.

It should be understood that the communication apparatus 1000 may correspond to the terminal device in the method 2000 according to embodiments of this application, and the communication apparatus 1000 may include a unit configured to perform the method performed by the terminal device in the method 2000 in FIG. 10. In addition, the units in the communication apparatus 1000 and the foregoing other operations and/or functions are separately used to implement a corresponding procedure of the method 2000 in FIG. 10. It should be understood that a specific process in which the units perform the foregoing corresponding steps is described in detail in the foregoing method embodiments. For brevity, details are not described herein.

In another possible design, the communication apparatus 1000 may be the data analytics network element in the foregoing method embodiments, or may be a chip configured to implement the function of the data analytics network element in the foregoing method embodiments.

It should be understood that the communication apparatus 1000 may correspond to the data analytics network element in the method 2000 according to embodiments of this application, and the communication apparatus 1000 may include a unit configured to perform the method performed by the data analytics network element in the method 2000 in FIG. 10. In addition, the units in the communication apparatus 1000 and the foregoing other operations and/or functions are separately used to implement a corresponding procedure of the method 2000 in FIG. 10. It should be understood that a specific process in which the units perform the foregoing corresponding steps is described in detail in the foregoing method embodiments. For brevity, details are not described herein.

It should be further understood that the transceiver unit 1010 in the communication apparatus 1000 may correspond to the communication interface 1120 in the communication device 1100 shown in FIG. 12.

For example, the communication apparatus 1000 may further include a processing unit 1020, and the processing unit 1020 in the communication apparatus 1000 may correspond to the processor 1110 in the communication device 1100 shown in FIG. 12.

It should be further understood that when the communication apparatus 1000 is a chip, the chip includes a transceiver unit. For example, the chip may further include a processing unit. The transceiver unit may be an input/output circuit or a communication interface. The processing unit may be a processor, a microprocessor, or an integrated circuit integrated on the chip.

The transceiver unit 1010 is configured to implement signal receiving and sending operations of the communication apparatus 1000, and the processing unit 1020 is configured to implement a signal processing operation of the communication apparatus 1000.

For example, the communication apparatus 1000 further includes a storage unit 1030. The storage unit 1030 is configured to store instructions.

FIG. 12 is a schematic block diagram of a communication device 1100 according to an embodiment of this application. As shown in FIG. 12, the communication device 1100 includes at least one processor 1110 and a communication interface 1120. The processor 1110 is coupled to a memory, and is configured to execute instructions stored in the memory, to control the communication interface 1120 to send a signal and/or receive a signal. For example, the communication device 1100 further includes a memory 1130, configured to store instructions.

It should be understood that the processor 1110 and the memory 1130 may be integrated into one processing apparatus. The processor 1110 is configured to execute program code stored in the memory 1130 to implement the foregoing functions. During specific implementation, the memory 1130 may alternatively be integrated into the processor 1110, or may be independent of the processor 1110.

It should be further understood that when the communication device 1100 corresponds to the terminal device in the method 200 to the method 2000, the communication interface 1120 may be a transceiver. The transceiver may include a receiver (or referred to as a receiving machine) and a transmitter (or referred to as a transmitting machine). The transceiver may further include one or more antennas.

When the communication device 1100 is a chip, the chip includes a transceiver unit and a processing unit. The transceiver unit may be an input/output circuit or a communication interface. The processing unit may be a processor, a microprocessor, or an integrated circuit integrated on the chip.

FIG. 13 is a schematic diagram of a chip system according to an embodiment of this application. The chip system herein may also be a system composed of circuits. The chip system 1200 shown in FIG. 13 includes a logic circuit 1210 and an input/output interface (input/output interface) 1220. The logic circuit is configured to: be coupled to an input/output interface, and transmit data (for example, first indication information) through the input/output interface, to perform the methods in FIG. 2 to FIG. 10.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

During implementation, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps of the foregoing methods in combination with hardware of the processor. To avoid repetition, details are not described herein again.

It should be noted that, the processor in embodiments of this application may be an integrated circuit chip, and has a signal processing capability. During implementation, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the method provided in embodiments of this application, this application further provides a computer program product, where the computer program product includes computer program code. When the computer program code is run on a computer, the computer is enabled to perform the method in any one of the embodiments shown in FIG. 2 to FIG. 10.

According to the method provided in embodiments of this application, this application further provides a computer-readable medium. The computer-readable medium stores program code. When the program code is run on a computer, the computer is enabled to perform the method in any one of the embodiments shown in FIG. 2 to FIG. 10.

According to the method provided in embodiments of this application, this application further provides a system, including the foregoing first network element, the terminal device, and the data analytics network element.

According to the method provided in embodiments of this application, this application further provides a system, including the foregoing session management network element, the user plane function network element, the terminal device, and the data analytics network element.

According to the method provided in embodiments of this application, this application further provides a system, including the foregoing application function network element, the terminal device, and the data analytics network element.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer instructions are loaded and executed on the computer, the procedure or functions according to embodiments of this application are all or partially generated. The computer instructions may be stored in a computer-readable storage medium, or transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for obtaining a data analytics result, comprising:
receiving, by a first network element, first information from a terminal device, wherein the first information comprises an analytics identity, and the analytics identity is used to identify a data analytics type requested by the terminal device;
obtaining, by the first network element, a data analytics result corresponding to the data analytics type; and
sending, by the first network element, the data analytics result to the terminal device.

2. The method according to claim 1, wherein the first information further comprises analytics filter information and/or a trigger condition for sending the data analytics result, and the analytics filter information is used to determine a data analytics range.

3. The method according to claim 1 or 2, wherein the obtaining, by the first network element, a data analytics result corresponding to the data analytics type comprises:
sending, by the first network element, a first request message to a data analytics network element, wherein the first request message comprises the analytics identity; and
receiving, by the first network element, second information from the data analytics network element, wherein the second information comprises the data analytics result.

4. The method according to claim 3, wherein the first request message further comprises the analytics filter information and/or the trigger condition for sending the data analytics result, and the analytics filter information is used to determine the data analytics range.

5. The method according to claim 3 or 4, wherein the method further comprises:
sending, by the first network element, a second request message to a network repository function network element, wherein the second request message comprises the analytics identity; and
receiving, by the first network element, address information of the data analytics network element from the network repository function network element, wherein the data analytics network element supports the data analytics type corresponding to the analytics identity.

6. The method according to claim 5, wherein the second request message further comprises location area information, and the location area information is determined based on the analytics filter information or location information of the terminal device; and
the data analytics network element supports providing a service for a location area identified by the location area information.

7. The method according to any one of claims 3 to 6, wherein the first request message further comprises a first identifier, and the first identifier corresponds to an identifier of the terminal device;
the second information further comprises the first identifier; and
the sending, by the first network element, the data analytics result to the terminal device comprises:
sending, by the first network element, the data analytics result to the terminal device based on a correspondence between the first identifier and the identifier of the terminal device.

8. The method according to any one of claims 3 to 7, wherein the first network element is an application function network element, and the receiving, by a first network element, first information from a terminal device comprises:
receiving, by the first network element, an application layer uplink data packet from the terminal device, wherein the application layer uplink data packet comprises the first information and an Internet protocol IP address of the terminal device; and
the sending, by the first network element, the data analytics result to the terminal device comprises:
sending, by the first network element, an application layer downlink data packet to the terminal device, wherein the application layer downlink data packet comprises the data analytics result, wherein
the first request message further comprises a subscription permanent identifier SUPI or a generic public subscription identifier GPSI corresponding to the IP address.

9. The method according to claim 8, wherein the method further comprises:
sending, by the first network element, a third request message to a binding support function network element, wherein the third request message comprises the IP address; and
receiving, by the first network element, a response message of the third request message from the binding support function network element, wherein the response message comprises the SUPI or the GPSI.

10. The method according to any one of claims 1 to 7, wherein the first network element is an access and mobility management function network element, and the receiving, by a first network element, first information from a terminal device comprises:
receiving, by the first network element, a registration request message from the terminal device, wherein the registration request message comprises the first information; and
the sending, by the first network element, the data analytics result to the terminal device comprises:
sending, by the first network element, a registration accept message to the terminal device, wherein the registration accept message comprises the data analytics result.

11. The method according to any one of claims 1 to 7, wherein the first network element is a session management network element, and the receiving, by a first network element, first information from a terminal device comprises:
receiving, by the first network element, a session modification request message from the terminal device, wherein the session modification request message comprises the first information; and
the sending, by the first network element, the data analytics result to the terminal device comprises:
sending, by the first network element, a session modification command message to the terminal device, wherein the session modification command message comprises the data analytics result.

12. The method according to any one of claims 1 to 7, wherein the first network element is a session management network element, and the receiving, by a first network element, first information from a terminal device comprises:
receiving, by the first network element, the first information through a user plane function network element, wherein the first information is comprised in a user plane uplink data packet received by the user plane function network element from the terminal device; and
the sending, by the first network element, the data analytics result to the terminal device comprises:
sending, by the first network element, a session modification command message to the terminal device, wherein the session modification command message comprises the data analytics result.

13. The method according to claim 12, wherein the method further comprises:
receiving, by the first network element, first indication information from the terminal device, wherein the first indication information indicates the terminal device to carry the first information in the user plane uplink data packet; and
sending, by the first network element to the user plane function network element based on the first indication information, a packet detection rule corresponding to the user plane uplink data packet.

14. The method according to any one of claims 1 to 7, wherein the first network element is a user plane function network element, and the receiving, by a first network element, first information from a terminal device comprises:
receiving, by the first network element, a user plane uplink data packet from the terminal device, wherein the user plane uplink data packet comprises the first information; and
the sending, by the first network element, the data analytics result to the terminal device comprises:
sending, by the first network element, a user plane downlink data packet to the terminal device, wherein the user plane downlink data packet comprises the data analytics result.

15. A method for obtaining a data analytics result, comprising:
sending, by a terminal device, first information to a first network element, wherein the first information comprises an analytics identity, and the analytics identity is used to identify a data analytics type requested by the terminal device; and
receiving, by the terminal device, a data analytics result corresponding to the data analytics type.

16. The method according to claim 15, wherein the first information further comprises analytics filter information and/or a trigger condition for sending the data analytics result, and the analytics filter information is used to determine a data analytics range.

17. The method according to claim 15 or 16, wherein the first network element is an access and mobility management function network element, and the sending, by a terminal device, first information to a first network element comprises:
sending, by the terminal device, a registration request message to the first network element, wherein the registration request message comprises the first information; and
the receiving, by the terminal device, a data analytics result corresponding to the data analytics type comprises:
receiving, by the terminal device, a registration accept message from the first network element, wherein the registration accept message comprises the data analytics result.

18. The method according to claim 15 or 16, wherein the first network element is a session management network element, and the sending, by a terminal device, first information to a first network element comprises:
sending, by the terminal device, a session modification request message to the first network element, wherein the session modification request message comprises the first information; and
the receiving, by the terminal device, a data analytics result corresponding to the data analytics type comprises:
receiving, by the terminal device, a session modification command message from the first network element, wherein the session modification command message comprises the data analytics result; or
the receiving, by the terminal device, a data analytics result corresponding to the data analytics type comprises:
receiving, by the terminal device, a user plane downlink data packet from a user plane function network element, wherein the user plane downlink data packet comprises the data analytics result.

19. The method according to claim 15 or 16, wherein the sending, by a terminal device, first information to a first network element comprises:
sending, by the terminal device, a user plane uplink data packet to the first network element, wherein the user plane uplink data packet comprises the first information; and
the receiving, by the terminal device, a data analytics result corresponding to the data analytics type comprises:
receiving, by the terminal device, a session modification command message from a session management network element, wherein the session modification command message comprises the data analytics result; or
the receiving, by the terminal device, a data analytics result corresponding to the data analytics type comprises:
receiving, by the terminal device, a user plane downlink data packet from the first network element, wherein the user plane downlink data packet comprises the data analytics result.

20. The method according to claim 19, wherein the method further comprises:
sending, by the terminal device, first indication information to the session management network element, wherein the first indication information indicates the terminal device to carry the first information in the user plane uplink data packet.

21. The method according to claim 15 or 16, wherein the sending, by a terminal device, first information to a first network element comprises:
sending, by the terminal device, an application layer uplink data packet to the first network element, wherein the application layer uplink data packet comprises the first information; and
the receiving, by the terminal device, a data analytics result corresponding to the data analytics type comprises:
receiving, by the terminal device, an application layer downlink data packet from the first network element, wherein the application layer downlink data packet comprises the data analytics result.

22. A method for obtaining a data analytics result, comprising:
receiving, by an application function network element, requirement information from a terminal device, wherein the requirement information indicates a data analytics type required by the terminal device; and
sending, by the application function network element, a data request message to a data analytics network element, wherein the data request message comprises an analytics identity, an identifier of the terminal device, and indication information indicating the data analytics network element to send, to the terminal device, a data analytics result corresponding to the data analytics type, and the analytics identity is used to identify the data analytics type.

23. The method according to claim 22, wherein the indication information comprises a notification identifier.

24. The method according to claim 22 or 23, wherein the identifier of the terminal device comprises a subscription permanent identifier SUPI or a generic public subscription identifier GPSI, and the method further comprises:
sending, by the application function network element, an Internet protocol IP address of the terminal device to a binding support function network element; and
receiving, by the application function network element, the SUPI or the GPSI of the terminal device from the binding support function network element.

25. The method according to any one of claims 22 to 24, wherein the data request message further comprises indication information indicating the data analytics network element to send the data analytics result to the terminal device in a control plane manner or a user plane manner.

26. The method according to any one of claims 22 to 25, wherein the method further comprises:
sending, by the application function network element, the identifier of the terminal device and the analytics identity to a unified data management network element; and
receiving, by the application function network element from the unified data management network element, an identifier of the data analytics network element corresponding to the identifier of the terminal device or an address of the data analytics network element.

27. The method according to any one of claims 22 to 26, wherein the method further comprises:
sending, by the application function network element, the analytics identity to the terminal device, wherein the analytics identity is used by the terminal device to determine the data analytics type of the data analytics result.

28. The method according to any one of claims 22 to 26, wherein the requirement information comprises correlation information of the data analytics type, and the data request message further comprises the correlation information; and the method further comprises:
determining, by the application function network element, the analytics identity based on the correlation information.

29. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 28.

30. A chip, comprising a processor and a communication interface, wherein the communication interface is configured to: receive data and/or information, and transmit the received data and/or information to the processor, and the processor processes the data and/or information, so that the method according to any one of claims 1 to 28 is performed.

31. A computer-readable storage medium, wherein the computer-readable storage medium stores a computer program, and when the computer program is executed, the method according to any one of claims 1 to 28 is performed.

32. A computer program product comprising instructions, wherein when the computer program product runs on a computer, the computer is enabled to perform the method according to any one of claims 1 to 28.

33. A communication system, comprising:
a first network element, configured to perform the method according to any one of claims 1 to 14; and
a data analytics network element, configured to provide a data analytics result for the first network element.

34. A communication system, comprising:
an application function network element, configured to perform the method according to any one of claims 22 to 28; and
a data analytics network element, configured to provide a data analytics result for a terminal device.
